# EUROPEAN PATENT APPLICATION

(11) **EP 3 163 570 A1**
(43) Date of publication of application: **03.05.2017**
(21) Application number: 15816059.8
(22) Date of filing: 30.06.2015
(51) Int. Cl.: G10L 19/00, G11B 20/12, G11B 27/00, H04N 21/439

(54) **INFORMATION PROCESSOR AND INFORMATION-PROCESSING METHOD**

(30) Priority: 30.06.2014 JP 2014134878; 27.05.2015 JP 2015107970; 29.05.2015 JP 2015109838; 12.06.2015 JP 2015119359; 16.06.2015 JP 2015121336; 22.06.2015 JP 2015124453
(71) Applicant: Sony Corporation, Tokyo 108-0075 (JP)
(72) Inventor: HIRABAYASHI Mitsuhiro, Tokyo 108-0075 (JP); YAMAMOTO Yuki, Tokyo 108-0075 (JP); CHINEN Toru, Tokyo 108-0075 (JP); SHI Runyu, Tokyo 108-0075 (JP)
(74) Representative: D Young & Co LLP
(86) International application number: PCT/JP2015/068751
(87) International publication number: WO 2016/002738

(57) **Abstract**

The present disclosure relates to an information processing apparatus and an information processing method that enable easy reproduction of audio data of a predetermined kind, of audio data of a plurality of kinds. A file generation device generates an audio file in which audio streams of a plurality of groups is divided into tracks for each one or more of the groups and arranged, and information related to the plurality of groups is arranged. The present disclosure can be applied to an information processing system configured from the file generation device that generates a file, a web server that records the file generated by the file generation device, and a moving image reproduction terminal that reproduces the file, for example.

## Description

### TECHNICAL FIELD

The present disclosure relates to an information processing apparatus and an information processing method, and especially relates to an information processing apparatus and an formation processing method that enable easy reproduction of audio data of a predetermined kind, of audio data of a plurality of kinds.

### BACKGROUND ART

In recent years, the mainstream of streaming services on the Internet has been over the top video (OTT-V). A technology growing popular as a basic technology is moving picture experts group phase-dynamic adaptive streaming over HTTP (MPEG-DASH) (for example, see Non-Patent Document 1).

In MPEG-DASH, a distribution server prepares moving image data groups with different screen sizes and encoding speeds, for one piece of moving image content, and a reproduction terminal requires the moving image data group with an optimum screen size and an optimum encoding speed according to a state of a transmission path, so that adaptive streaming distribution is realized.

### CITATION LIST

### NON-PATENT DOCUMENT

Non-Patent Document 1: Dynamic Adaptive Streaming over HTTP (MPEG-DASH) (URL:http://mpeg.chiariglione.org/standards/mpeg-dash/media-pres entation-description-and-segment-formats/text-isoiec-23009-12012 -dam-1)

### SUMMARY OF INVENTION

### PROBLEMS TO BE SOLVED BY THE INVENTION

However, easy reproduction of audio data of a predetermined group, of audio data of a plurality of groups, has not been considered.

The present disclosure has been made in view of the foregoing, and enables easy reproduction of audio data of a desired group, of audio data of a plurality of groups.

### SOLUTION TO PROBLEMS

An information processing apparatus of a first aspect of the present disclosure is an information processing apparatus including a file generation unit that generates a file in which audio data of a plurality of kinds is divided into tracks for each one or more of the kinds and arranged, and information related to the plurality of kinds is arranged.

An information processing method of the first aspect of the present disclosure corresponds to the information processing apparatus of the first aspect of the present disclosure.

In the first aspect of the present disclosure, the file in which audio data of a plurality of kinds is divided into tracks for each one or more of the kinds and arranged, and information related to the plurality of kinds is arranged is generated.

An information processing apparatus of a second aspect of the present disclosure is an information processing apparatus including a reproduction unit that reproduces, from a file in which audio data of a plurality of kinds is divided into tracks for each one or more of the kinds and arranged, and information related to the plurality of kinds is arranged, the audio data in a predetermined track.

An information processing method of the second aspect of the present disclosure corresponds to the information processing apparatus of the second aspect of the present disclosure.

In the second aspect of the present disclosure, the audio data of a predetermined track is reproduced from the file in which audio data of a plurality of kinds is divided into tracks for each one or more of the kinds and arranged, and information related to the plurality of kinds is arranged.

Note that the information processing apparatuses of the first and second aspects can be realized by causing a computer to execute a program.

Further, to realize the information processing apparatuses of the first and second aspects, the program executed by the computer can be transmitted through a transmission medium, or can be recorded on a recording medium and provided.

### EFFECTS OF THE INVENTION

According to the first aspect of the present disclosure, a file can be generated. Further, according to the first aspect of the present disclosure, a file that enables easy reproduction of audio data of a predetermined kind, of audio data of a plurality of kinds, can be generated.

According to the second aspect of the present disclosure, audio data can be reproduced. Further, according to the second aspect of the present disclosure, audio data of a predetermined kind, of audio data of a plurality of kinds, can be easily reproduced.

### BRIEF DESCRIPTION OF DRAWINGS

Fig. 1 is a diagram illustrating a structure of an MPD file.
Fig. 2 is a diagram illustrating relationship among "Period", "Representation", and "Segment".
Fig. 3 is a diagram illustrating a hierarchical structure of the MPD file.
Fig. 4 is a diagram illustrating relationship between a structure and a time axis of the MPD file.
Fig. 5 is a diagram for describing an outline of a track of a 3D audio file format of MP4.
Fig. 6 is a diagram illustrating a structure of a moov box.
Fig. 7 is a diagram illustrating a hierarchical structure of 3D audio.
Fig. 8 is a diagram for describing an outline of an information processing system in a first embodiment to which the present disclosure is applied.
Fig. 9 is a diagram for describing an outline of a first example of a track in the first embodiment to which the present disclosure is applied.
Fig. 10 is a diagram illustrating an example of syntax of sample entry of a base track.
Fig. 11 is a diagram illustrating an example of syntax of sample entry of a track of a group that forms switch Group.
Fig. 12 is a diagram illustrating a first example of a segment structure.
Fig. 13 is a diagram illustrating a second example of the segment structure.
Fig. 14 is a diagram illustrating a description example of a level assignment box.
Fig. 15 is a diagram illustrating a first description example of the MPD file in the first embodiment to which the present disclosure is applied.
Fig. 16 is a block diagram illustrating a configuration example of a file generation device of Fig. 8.
Fig. 17 is a flowchart for describing file generation processing of the file generation device of Fig. 16.
Fig. 18 is a block diagram illustrating a configuration example of a streaming reproduction unit realized with a moving image reproduction terminal of Fig. 8.
Fig. 19 is a flowchart for describing reproduction processing of the streaming reproduction unit of Fig. 18.
Fig. 20 is a diagram for describing an outline of a second example of the track in the first embodiment to which the present disclosure is applied.
Fig. 21 is a diagram illustrating an example of syntax of sample group entry of a track of a group that forms switch Group.
Fig. 22 is a diagram illustrating an example of syntax of sample entry of a track of each of groups.
Fig. 23 is a diagram for describing an outline of a third example of the track of an audio file.
Fig. 24 is a diagram illustrating a second description example of the MPD file.
Fig. 25 is a diagram illustrating another example of the second description example of the MPD file.
Fig. 26 is a diagram for describing an outline of a fourth example of the track of the audio file.
Fig. 27 is a diagram illustrating a third description example of the MPD file.
Fig. 28 is a diagram for describing an outline of a fifth example of the track of the audio file.
Fig. 29 is a diagram illustrating an example of syntax of sample entry in which 4cc is "mha3".
Fig. 30 is a diagram illustrating another example of the syntax of the sample entry where 4cc is "mha3".
Fig. 31 is a diagram illustrating a fourth description example of a MPD file.
Fig. 32 is a diagram for describing an outline of another example of the third example of the track of the audio file.
Fig. 33 is a diagram for describing an outline of another example of the fourth example of the track of the audio file.
Fig. 34 is a diagram for describing an outline of another example of the fifth example of the track of the audio file.
Fig. 35 is a diagram for describing an outline of a sixth example of the track of the audio file.
Fig. 36 is a diagram illustrating an example of syntax of sample entry of a base track and a group track of Fig. 35.
Fig. 37 is a diagram illustrating still another example of the syntax of the sample entry where 4cc is "mha3".
Fig. 38 is a diagram for describing an outline of a track in a second embodiment to which the present disclosure is applied.
Fig. 39 is a diagram illustrating a first description example of an MPD file in the second embodiment to which the present disclosure is applied.
Fig. 40 is a diagram for describing an outline of an information processing system in the second embodiment to which the present disclosure is applied.
Fig. 41 is a block diagram illustrating a configuration example of a file generation device of Fig. 40.
Fig. 42 is a flowchart for describing file generation processing of the file generation device of Fig. 41.
Fig. 43 is a block diagram illustrating a configuration example of a streaming reproduction unit realized with a moving image reproduction terminal of Fig. 40.
Fig. 44 is a flowchart for describing an example of reproduction processing of the streaming reproduction unit of Fig. 43.
Fig. 45 is a diagram illustrating a second description example of the MPD file in the second embodiment to which the present disclosure is applied.
Fig. 46 is a diagram illustrating a third description example of the MPD file in the second embodiment to which the present disclosure is applied.
Fig. 47 is a diagram illustrating a fourth description example of the MPD file in the second embodiment to which the present disclosure is applied.
Fig. 48 is a diagram illustrating a fifth description example of the MPD file in the second embodiment to which the present disclosure is applied.
Fig. 49 is a diagram illustrating a sixth description example of the MPD file in the second embodiment to which the present disclosure is applied.
Fig. 50 is a diagram illustrating a seventh description example of the MPD file in the second embodiment to which the present disclosure is applied.
Fig. 51 is a diagram illustrating an example of a track structure of an audio file including a plurality of base tracks.
Fig. 52 is a diagram illustrating another example of the track structure of the audio file including the plurality of base tracks.
Fig. 53 is a block diagram illustrating a configuration example of hardware of a computer.

### MODE FOR CARRYING OUT THE INVENTION

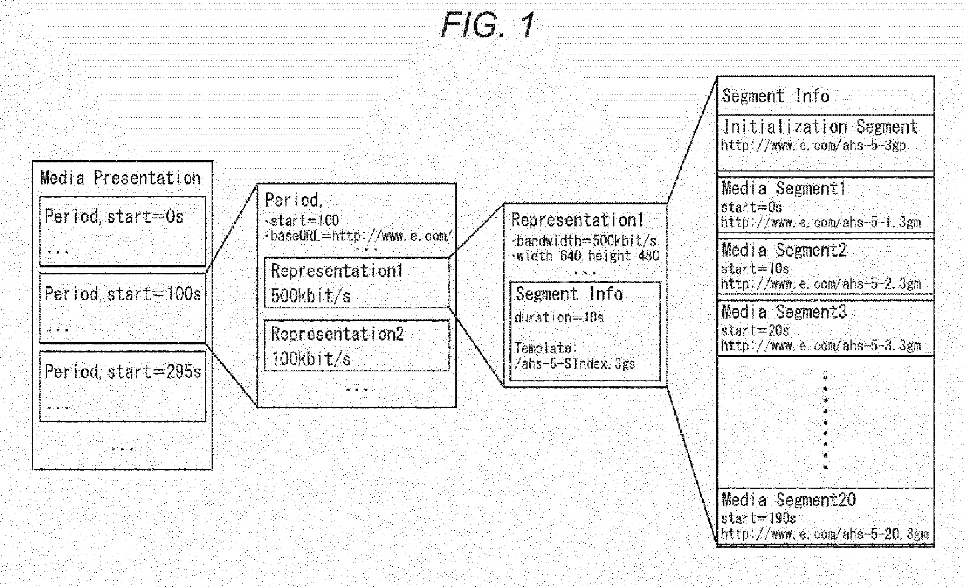

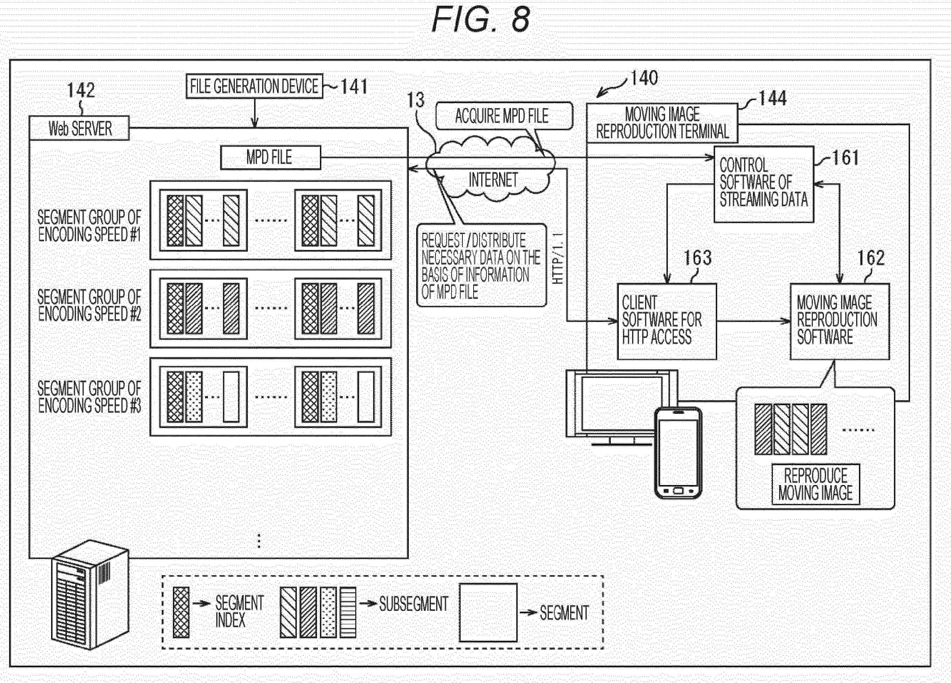

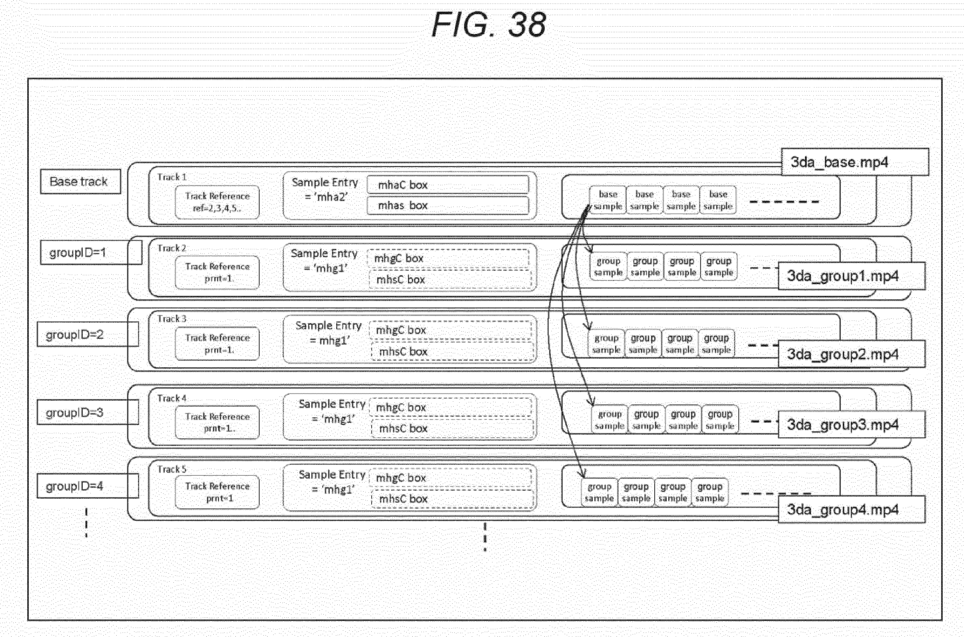

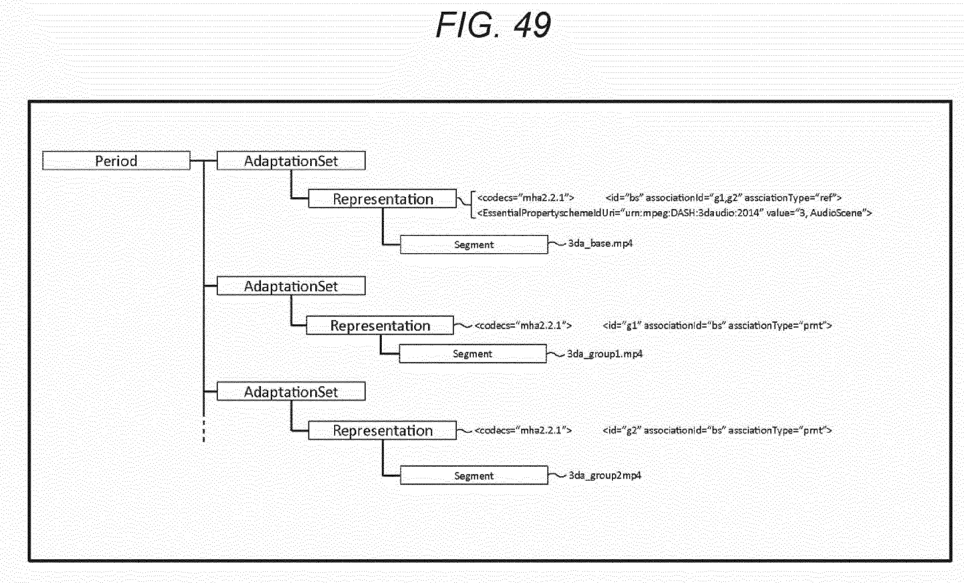

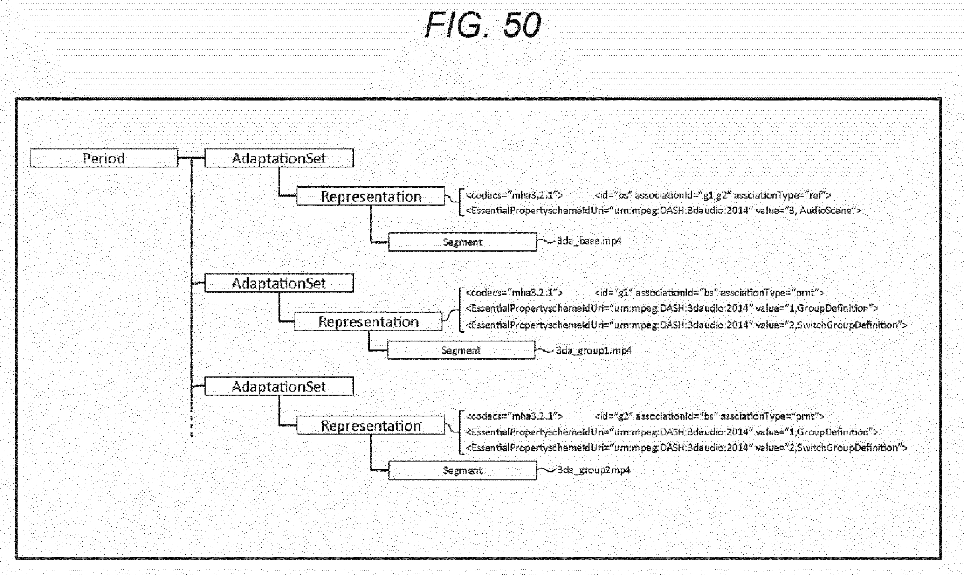

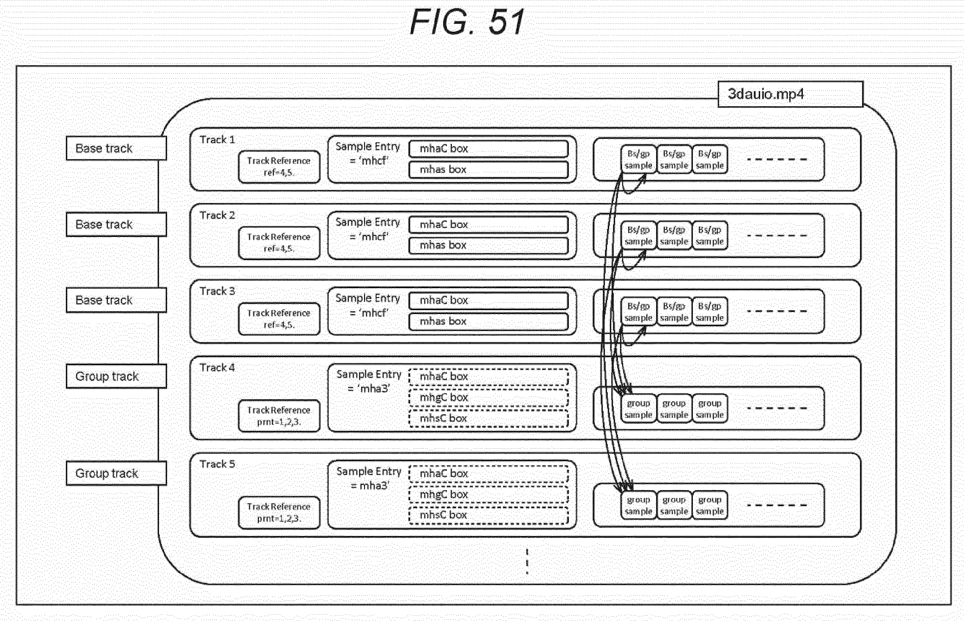

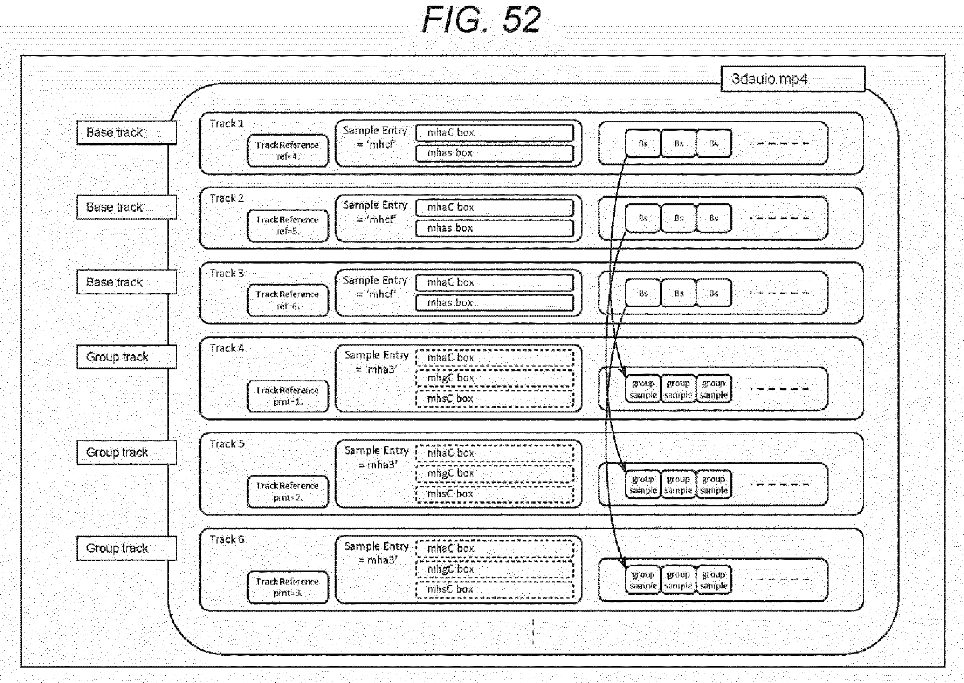

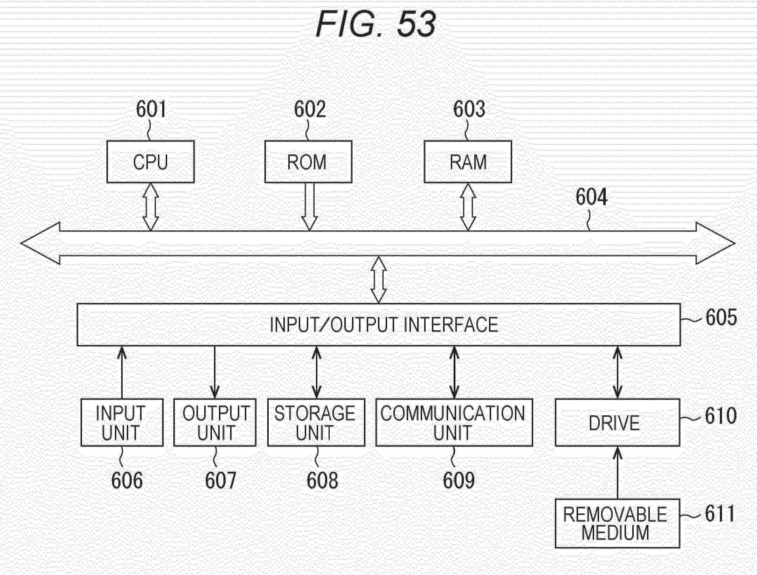

Hereinafter, presuppositions of the present disclosure and embodiments for implementing the present disclosure (hereinafter, referred to as embodiments) will be described. Note that the description will be given as follows:
0. Presuppositions of Present Disclosure (Figs. 1 to 7)
1. First Embodiment (Figs. 8 to 37)
2. Second Embodiment (Figs. 38 to 50)
3. Another Example of Base Track (Figs. 51 and 52)
4. Third Embodiment (Fig. 53)

<Presuppositions of Present Disclosure> (Description of Structure of MPD File)

Fig. 1 is a diagram illustrating a structure of a media presentation description (MPD) file of MPEG-DASH.

In an analysis (parsing) of an MPD file, an optimum one is selected from "Representation" attributes included in "Periods" of the MPD file (Media Presentation of Fig. 1).

Then, a file is acquired and processed by reference to a uniform resource locator (URL) and the like of "Initialization Segment" in a head of the selected "Representation". Following that, a file is acquired and reproduced by reference to a URL and the like of subsequent "Media Segment".

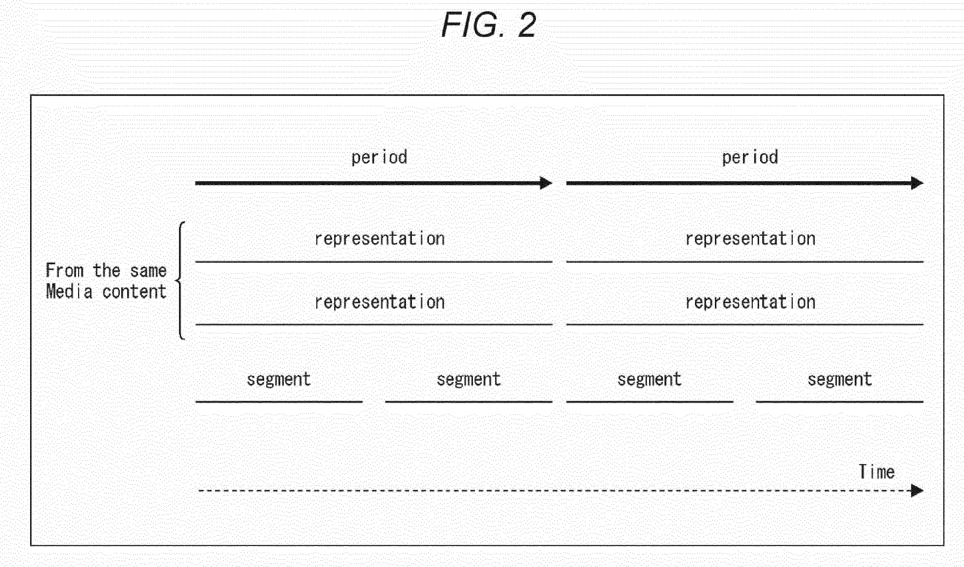

Note that relationship among "Period", "Representation", and "Segment" in the MPD file is illustrated in Fig. 2. That is, one piece of moving image content can be managed in units of a longer time than the segment by "Period", and can be managed in units of a segment by "Segment" in each of "Periods". Further, in each of "Periods", the moving image content can be managed in units of an attribute of a stream by "Representation".

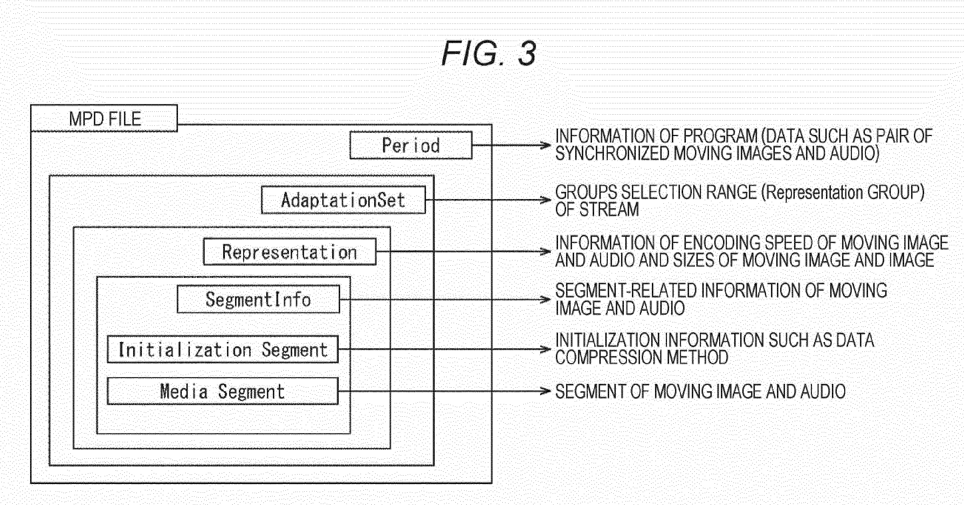

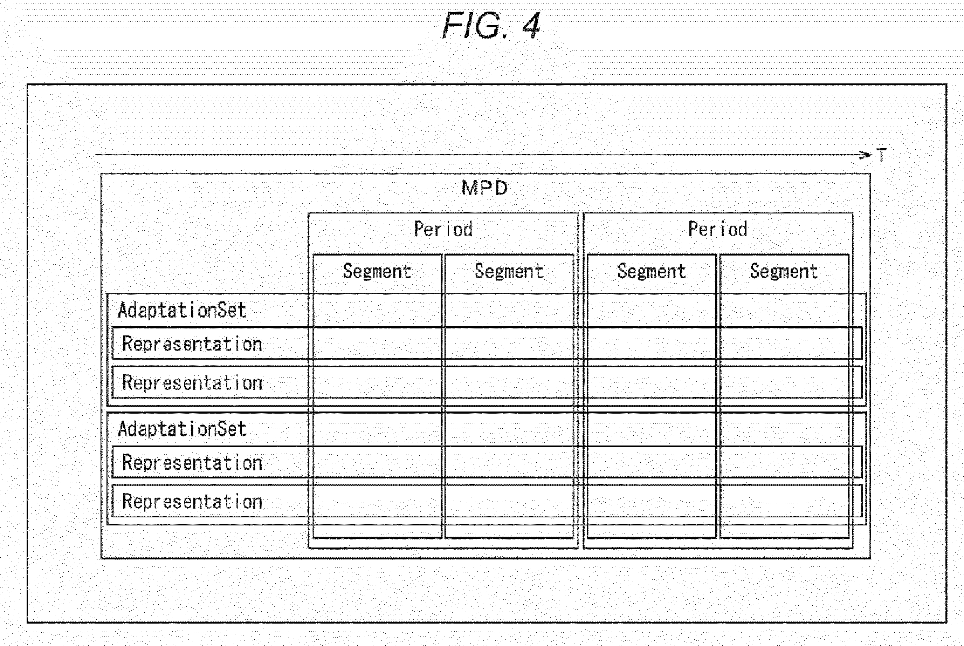

Therefore, the MPD file has a hierarchical structure illustrated in Fig. 3 in and under "Period" . Further, arrangement of the structure of the MPD file on a time axis is illustrated in the example of Fig. 4. As is clear from Fig. 4, a plurality of "Representations" exists with respect to the same segment. By adaptively selecting any of these "Representations", a stream of a desired attribute of a user can be acquired and reproduced.

### (Outline of 3D Audio File Format)

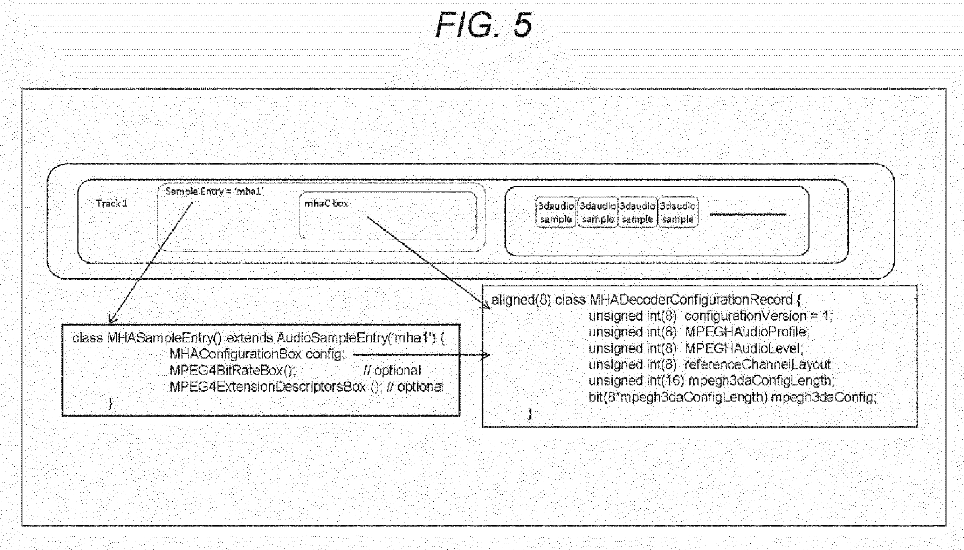

Fig. 5 is a diagram for describing an outline of a track of a 3D audio file format of MP4.

In an MP4 file, codec information of the moving image content, and position information indicating a position in a file can be managed for each track. In a 3D audio file format of MP4, all of audio streams (elementary streams (ESs)) of 3D audio (Channel audio/Object audio/SAOC Object audio/HOA audio/metadata) are recorded as one track in units of a sample (frame). Further, the codec information (Pro file/level/audio configuration) of the 3D audio is stores as sample entry.

The Channel audio that configures the 3D audio is audio data in units of a channel, and the Object audio is audio data in units of an object. Note that an object is a sound source, and the audio data in units of an object is acquired with a microphone or the like attached to the object. The object may be a substance such as a fixed microphone stand or a moving body such as a person.

Further, the SAOC Object audio is audio data of spatial audio object coding (SAOC), the HOA audio is audio data of higher order ambisonics (HOA), and the metadata is metadata of the Channel audio, the Object audio, the SAOC Object audio, and the HOA audio.

### (Structure of moov Box)

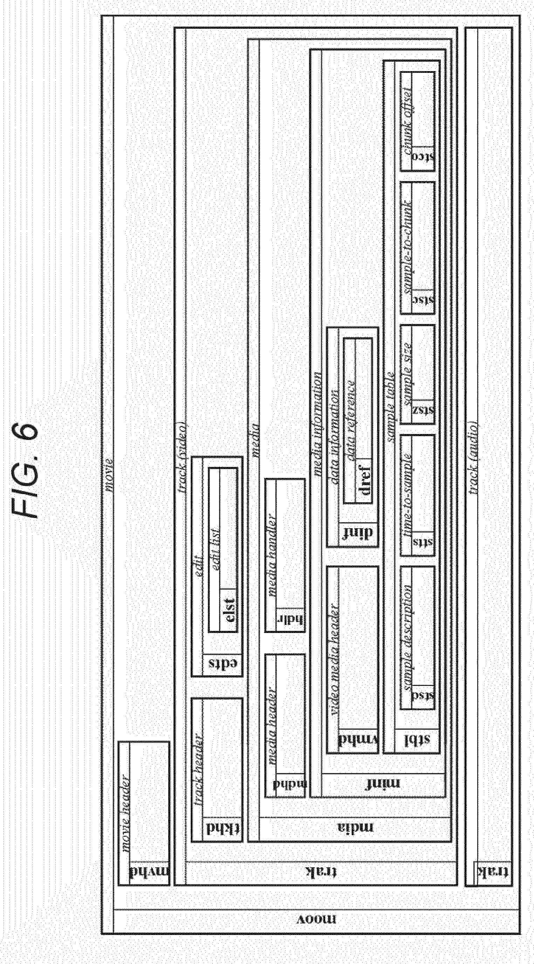

Fig. 6 is a diagram illustrating a structure of a moov box of the MP4 file.

As illustrated in Fig. 6, in the MP4 file, image data and audio data are recorded as different tracks. In Fig. 6, although details are not described, the track of the audio data is similar to the track of the image data. The sample entry is included in sample description arranged in a stsd box in the moov box.

By the way, in broadcasting or local storage reproduction of the MP4 file, typically, a server side sends the audio streams of all of the 3D audio. Then, a client side decodes and outputs only the audio streams of necessary 3D audio while parsing the audio streams of all of the 3D audio. However, in a case where a bit rate is high or there is a restriction on a reading rate of the local storage, it is desirable to reduce a load of the decoding processing by acquiring only the audio streams of the necessary 3D audio.

Further, in stream reproduction of the MP4 file conformable to MPEG-DASH, the server side prepares the audio streams at a plurality of encoding speeds. Therefore, the client side can select and acquire the audio streams at an encoding speed optimum for a reproduction environment by acquiring only the audio streams of necessary 3D audio.

As described above, in the present disclosure, by dividing the audio streams of the 3D audio into tracks according to kinds, and arranging the audio streams in an audio file, only the audio streams of a predetermined kind of the 3D audio can be efficiently acquired. Accordingly, in the broadcasting or the local storage reproduction, the load of the decoding processing can be reduced. Further, in stream reproduction, the audio streams with highest quality, of the audio streams of the necessary 3D audio, can be reproduced according to a band.

### (Description of Hierarchical Structure of 3D Audio)

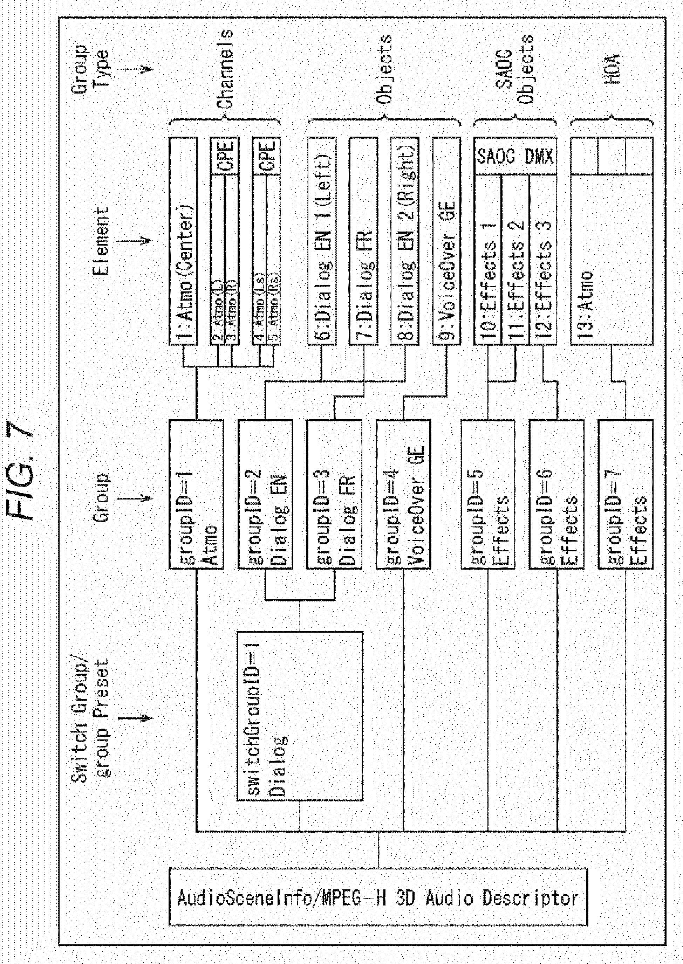

Fig. 7 is a diagram illustrating a hierarchical structure of the 3D audio.

As illustrated in Fig. 7, the audio data of the 3D audio is an audio element (Element) that is different in each audio data. Types of the audio elements include a single channel element (SCE) and a channel pair element (CPE) . The type of the audio element of the audio data of one channel is the SCE and the type of the audio element corresponding to the audio data of two channels is the CPE.

The audio elements of the same audio kind (Channel/Object/SAOC Object/HOA) form a group. Therefore, examples of a group type (GroupType) include Channels, Objects, SAOC Objects, and HOA. Two or more groups can form switch Group or group Preset as needed.

The switch Group is a group (exclusive reproduction group) in which an audio stream of the group included therein is exclusively reproduced. That is, as illustrated in Fig. 7, in a case where there are a group of the Object audio for English (EN) and a group of the Object audio for French (FR) , only one of the groups shouldbe reproduced. Therefore, the switch Group is formed of the group of the Object audio for English with a group ID of 2, and the group of the Object audio for French with a group ID of 3. Accordingly, the Object audio for English or the Object audio for French is exclusively reproduced.

Meanwhile, the group Preset defines a combination of the groups intended by a content creator.

Further, the metadata of the 3D audio is Extelement (Ext Element) that is different in each metadata. Types of the Extelement include Object Metadata, SAOC 3D Metadata, HOA Metadata, DRC Metadata, SpatialFrame, SaocFrame, and the like. The Extelement of the Object Metadata is metadata of all of the Object audio, and the Extelement of the SAOC 3D Metadata is metadata of all of the SAOC audio. Further, the Extelement of the HOA Metadata is metadata of all of the HOA audio, and Extelement of dynamic range control (DRC) Metadata is metadata of all of the Object audio, the SAOC audio, and the HOA audio.

As described above, division units of the audio data, of the 3D audio, include the audio element, the group type, the group, the switch Group, and the group Preset. Therefore, the audio streams of the audio data, of the 3D audio, can be divided into different tracks in each kind, where the kind is the audio element, the group type, the group, the switch Group, or the group Preset.

Further, division units of the metadata, of the 3D audio, include a type of the Extelement and the audio element corresponding to the metadata. Therefore, the audio streams of the metadata of the 3D audio can be divided into different tracks in each kind, where the kind is the Extelement or the audio element corresponding to the metadata.

In the embodiment below, the audio streams of the audio data are divided into the tracks in each one or more groups, and the audio streams of the metadata are divided into the tracks in each type of the Extelement.

### <First Embodiment>

### (Outline of Information Processing System)

Fig. 8 is a diagram for describing an outline of an information processing system in a first embodiment to which the present disclosure is applied.

An information processing system 140 of Fig. 8 is configured such that a web server 142 connected with a file generation device 141 and a moving image reproduction terminal 144 are connected through the Internet 13.

In the information processing system 140, the web server 142 distributes the audio streams of the tracks in the group to be reproduced to the moving image reproduction terminal 144 by a method conforming to MPEG-DASH.

To be specific, the file generation device 141 encodes the audio data and the metadata of the 3D audio of the moving image content at plurality of encoding speeds to generate the audio streams. The file generation device 141 makes files of all of the audio streams at the encoding speeds and in each time unit from several seconds to ten seconds, which is called segment, to generate the audio file. At this time, the file generation device 141 divides the audio streams for each group and each type of the Extelement, and arranges the audio streams in the audio file as the audio streams in the different tracks. The file generation device 141 uploads the generated audio file onto the web server 142.

Further, the file generation device 141 generates the MPD file (management file) that manages the audio file and the like. The file generation device 141 uploads the MPD file onto the web server 142.

The web server 142 stores the audio file of each encoding speed and segment, and the MPD file uploaded by the file generation device 141. The web server 142 transmits the stored audio file, the MPD file, and the like, to the moving image reproduction terminal 144, in response to a request from the moving image reproduction terminal 144.

The moving image reproduction terminal 144 executes control software of streaming data (hereinafter, referred to as control software) 161, moving image reproduction software 162, client software for hypertext transfer protocol (HTTP) access (hereinafter, referred to as access software) 163, and the like.

The control software 161 is software that controls data streamed from the web server 142. To be specific, the control software 161 causes the moving image reproduction terminal 144 to acquire the MPD file from the web server 142.

Further, the control software 161 commands the access software 163 to send a transmission request of the group to be reproduced specified by the moving image reproduction software 162, and the audio streams of the tracks of the type of Extelement corresponding to the group, on the basis of the MPD file.

The moving image reproduction software 162 is software that reproduces the audio streams acquired from the web server 142. To be specific, the moving image reproduction software 162 specifies the group to be reproduced and the type of the Extelement corresponding to the group, to the control software 161. Further, the moving image reproduction software 162 decodes the audio streams received from the moving image reproduction terminal 144 when receiving notification of reception start from the access software 163. The moving image reproduction software 162 synthesizes and outputs the audio data obtained as a result of the decoding, as needed.

The access software 163 is software that controls communication between the moving image reproduction terminal 144 and the web server 142 through the Internet 13 using the HTTP. To be specific, the access software 163 causes the moving image reproduction terminal 144 to transmit a transmission request of the audio stream of the track to be reproduced included in the audio file in response to the command of the control software 161. Further, the access software 163 causes the moving image reproduction terminal 144 to start reception of the audio streams transmitted from the web server 142 in response to the transmission request, and supplies notification of the reception start to the moving image reproduction software 162.

Note that, in the present specification, only the audio file of the moving image content will be described. However, in reality, a corresponding image file is generated and reproduced together with the audio file.

### (Outline of First Example of Track of Audio File)

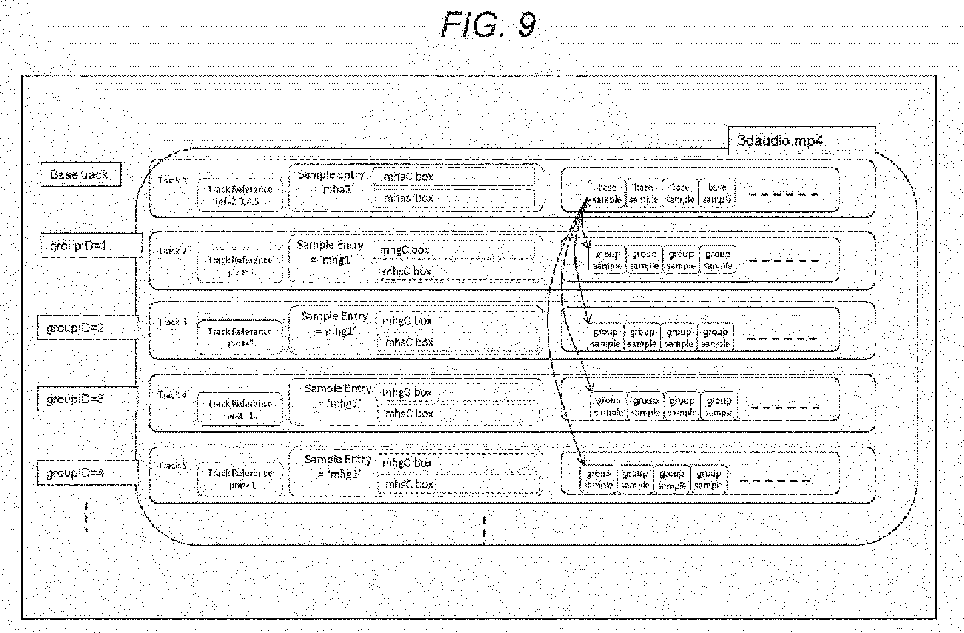

Fig. 9 is a diagram for describing an outline of a first example of the track of the audio file.

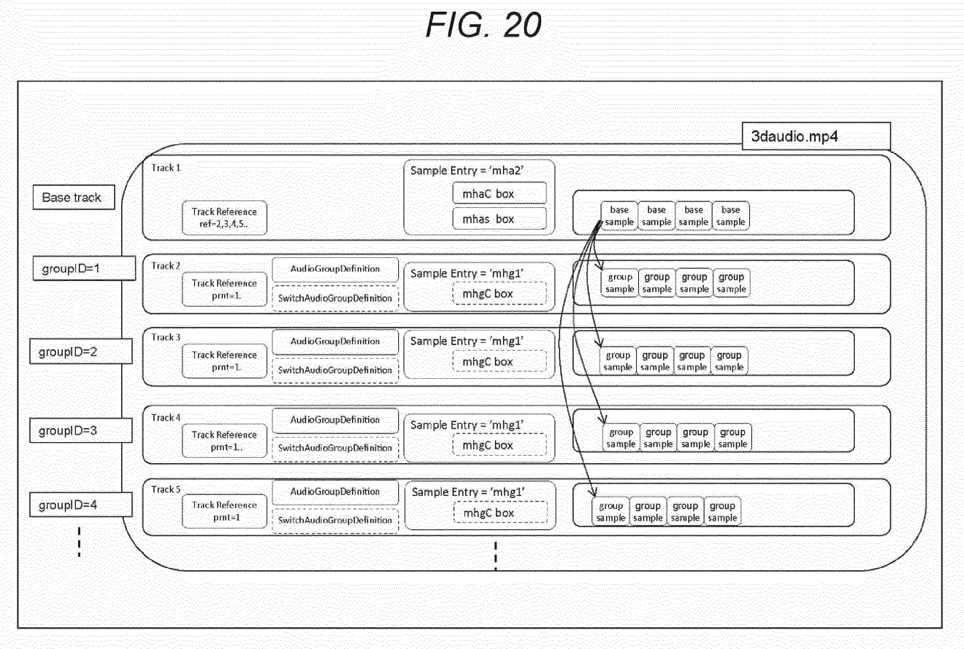

Note that, in Fig. 9, only the track of the audio data, of the 3D audio, is illustrated for convenience of description. The same applies to Figs. 20, 23, 26, 28, 30, 32 to 35, and 38.

As illustrated in Fig. 9, the audio streams of all of the 3D audio are stored in one audio file (3dauio.mp4) . In the audio file (3dauio.mp4), the audio streams of the groups of the 3D audio are respectively divided into the different tracks and arranged. Further, information related to the entire 3D audio is arranged as the base track (Base Track).

Track Reference is arranged in a track box of each of the tracks. The Track Reference indicates reference relationship between a corresponding track and another track. To be specific, the Track Reference indicates an ID of another track in the reference relationship, unique to the track (hereinafter, referred to as track ID).

In the example of Fig. 9, the track IDs of the base track, the track in a group #1 with a group ID of 1, the track in a group #2 with a group ID of 2, the track in a group #3 with a group ID of 3, the track in a group #4 with a group ID of 4, are 1, 2, 3, 4, and 5. Further, the Track Reference of the base track is 2, 3, 4, and 5, and the Track Reference of the tracks in the groups #1 to #4 is 1 that is the track ID of the base track. Therefore, the base track, and the tracks in the groups #1 to #4 are in the reference relationship. That is, the base track is referenced at the time of reproduction of the tracks in the groups #1 to #4.

Further, 4cc (character code) of the sample entry of the base track is "mha2", and in the sample entry of the base track, an mhaC box including config information of all of the groups of the 3D audio or config information necessary for decoding only the base track, and an mhas box including information related to all of the groups and the switch Group of the 3D audio are arranged. The information related to the groups is configured from the IDs of the groups, information indicating content of data of the element classified into the groups, and the like. The information related to the switch Group is configured from an ID of the switch Group, the IDs of the groups that form the switch Group, and the like.

The 4cc of the sample entry of the track of each of the groups is "mhg1", and in the sample entry of the track of each of the groups, an mhgC box including information related to the group may be arranged. In a case where a group forms the switch Group, an mhsC box including information related to the switch Group is arranged in the sample entry of the track in the group.

In a sample of the base track, reference information to samples of the tracks in the groups or config information necessary for decoding the reference information is arranged. By arranging the samples of the groups referenced by the reference information in order of arrangement of the reference information, the audio streams of the 3D audio before being divided into the tracks can be generated. The reference information is configured from positions and sizes of the samples of the tracks the groups, the group types, and the like.

### (Example of Syntax of Sample Entry of Base Track)

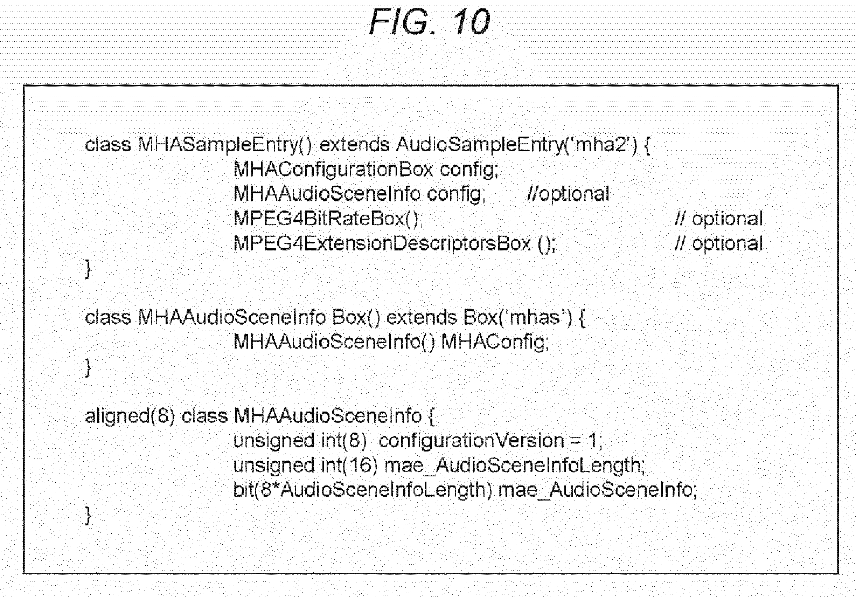

Fig. 10 is a diagram illustrating an example of syntax of the sample entry of the base track.

As illustrated in Fig. 10, in the sample entry of the base track, the mhaC box (MHAConfigration Box), the mhas box (MHAAudioSceneInfo Box), and the like are arranged. In the mhaC box, the config information of all of the groups of the 3D audio or the config information necessary for decoding only the base track is described. Further, in the mhas box, AudioScene information including the information related to all of the groups and the switch Group of the 3D audio is described. The AudioScene information describes the hierarchical structure of Fig. 7.

### (Example of Syntax of Sample Entry of Track of each of Groups)

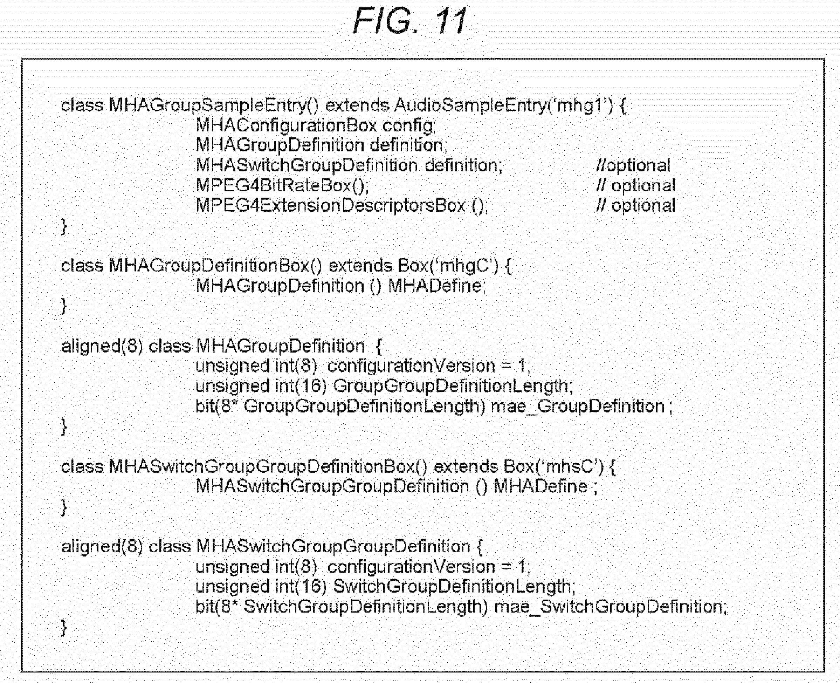

Fig. 11 is a diagram illustrating an example of syntax of sample entry of the track of each of the groups.

As illustrated in Fig. 11, in the sample entry of the track of each of the groups, the mhaC box (MHAConfigration Box), the mhgC box (MHAGroupDefinitionBox), the mhsC box (MHASwitchGropuDefinitionBox), and the like are arranged.

In the mhaC box, Config information necessary for decoding the corresponding track is described. Further, in the mhgC box, AudioScene information related to the corresponding group is described as GroupDefinition. In the mhsC box, AudioScene information related to the switch Group is described in SwitchGroupDefinition in a case where the corresponding group forms the switch Group.

### (First Example of Segment Structure of Audio File)

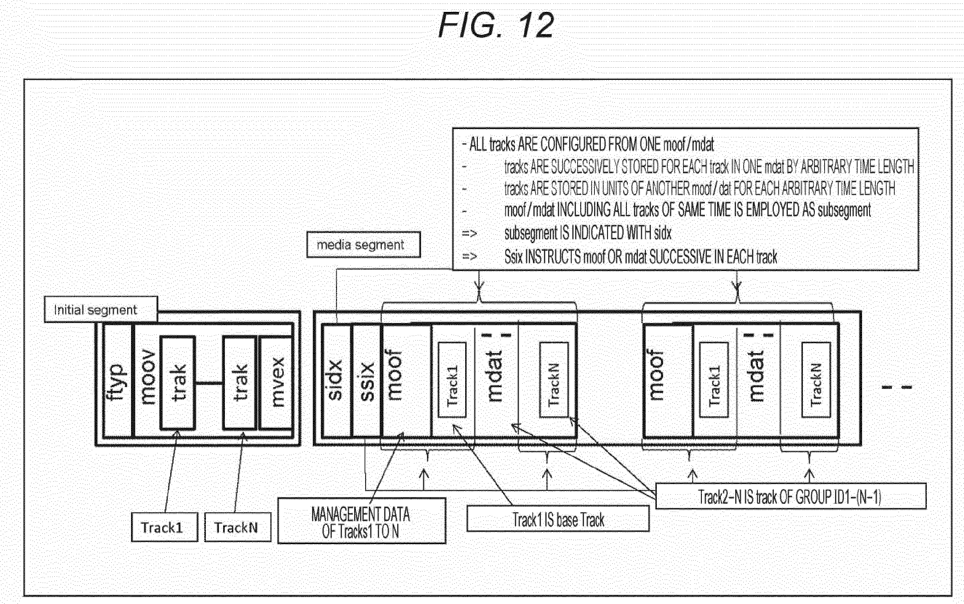

Fig. 12 is a diagram illustrating a first example of a segment structure of the audio file.

In the segment structure of Fig. 12, an Initial segment is configured from an ftyp box and a moov box. In the moov box, a trak box is arranged for each track included in the audio file. Further, in the moov box, an mvex box including information indicating corresponding relationship between the track ID of each of the tracks and a level used in an ssix box in a media segment, and the like are arranged.

Further, the media segment is configured from an sidx box, an ssix box, and one or more subsegments. In the sidx box, position information indicating positions of the subsegments in the audio file is arranged. In the ssix box, position information of the audio streams of the levels arranged in an mdat box is arranged. Note that the level corresponds to the track. Further, the position information of the first track is the position information of data made of an moof box and the audio stream of the first track.

The subsegment is provided for each arbitrary time length, and the subsegment is provided with a pair of the moof box and the mdat box, which is common to all of the tracks. In the mdat box, the audio streams of all of the tracks are collectively arranged by an arbitrary time length, and in the moof box, management information of the audio streams is arranged. The audio streams of the tracks arranged in the mdat box are successive in each track.

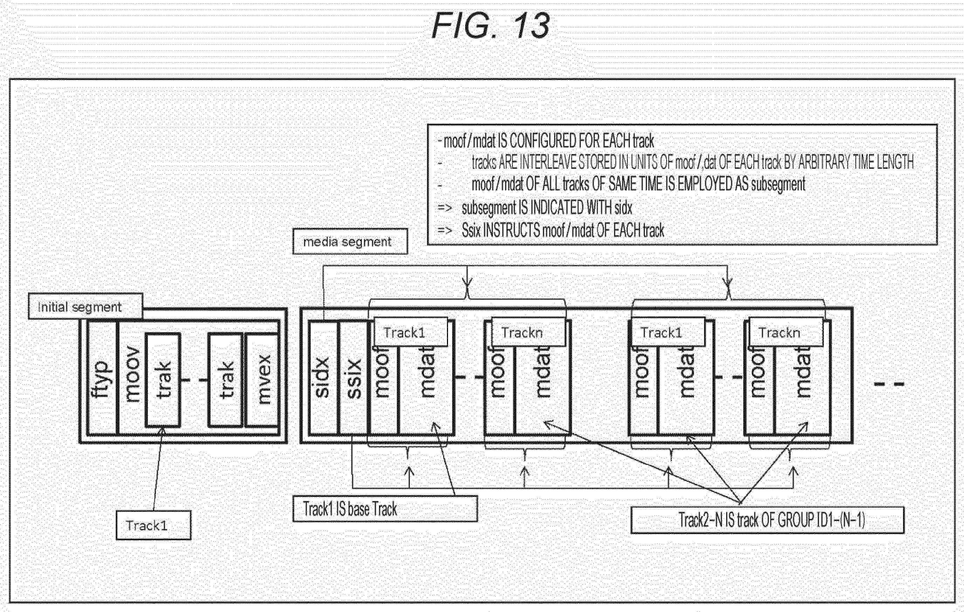

In the example of Fig. 12, Track1 with the track ID of 1 is the base track, and Track2 to TrackN with the tracks ID of 2 to N are tracks in the groups with the group ID of 1 to N - 1. The same applies to Fig. 13 described below.

### (Second Example of Segment Structure of Audio File)

Fig. 13 is a diagram illustrating a second example of the segment structure of the audio file.

The segment structure of Fig. 13 is different from the segment structure of Fig. 12 in that the moof box and the mdat box are provided for each track.

That is, the Initial segment of Fig. 13 is similar to the Initial segment of Fig. 12. Further, the media segment of Fig. 13 is configured from the sidx box, the ssix box, and one or more subsegments, similarly to the media segment of Fig. 12. In the sidx box, the position information of the subsegments is arranged, similarly to the sidx box of Fig. 12. In the ssix box, position information of data of the levels made of the moof box and the mdat box is included.

The subsegment is provided for each arbitrary time length, and the subsegment is provided with a pair of the moof box and the mdat box for each track. That is, in the mdat box of each of the tracks, the audio streams of the tracks are collectively arranged (interleave storage) by an arbitrary time length, and in the moof box, management information of the audio streams is arranged.

As illustrated in Figs. 12 and 13, the audio streams of the tracks are collectively arranged by an arbitrary time length. Therefore, audio stream acquisition efficiency through the HTTP or the like is improved, compared with a case where the audio streams are collectively arranged in units of a sample.

### (Description Example of mvex Box)

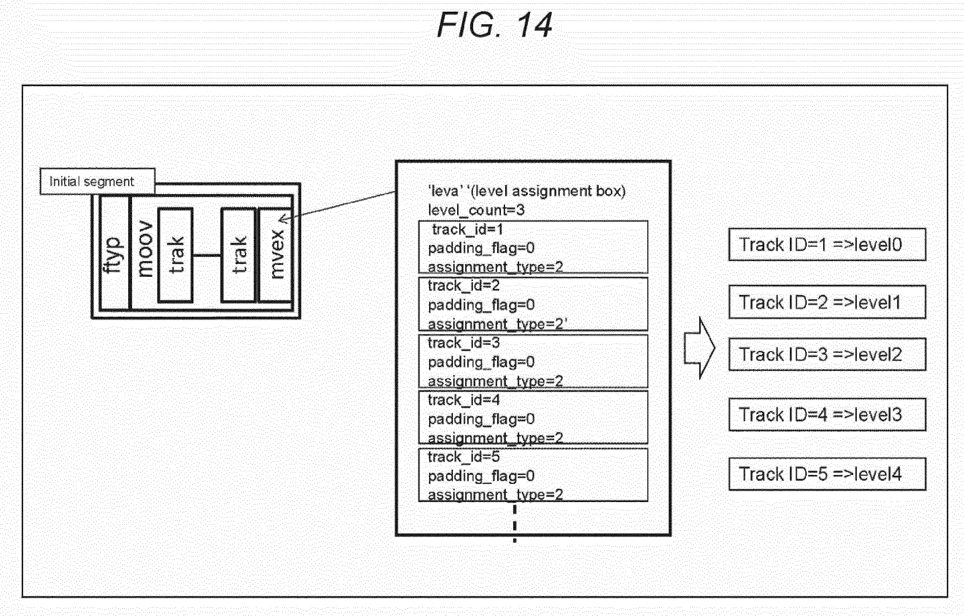

Fig. 14 is a diagram illustrating a description example of a level assignment box arranged in the mvex box of Figs. 12 and 13.

The level assignment box is a box that associates the track ID of each of the tracks and the level used in the ssix box. In the example of Fig. 14, the base track with the track ID of 1 is associated with a level 0, and a channel audio track with the track ID of 2 is associated with a level 1. Further, an HOA audio track with the track ID of 3 is associated with a level 2, and an object metadata track with the track ID of 4 is associated with a level 3. Further, an object audio track with the track ID of 5 is associated with a level 4.

### (First Description Example of MPD File)

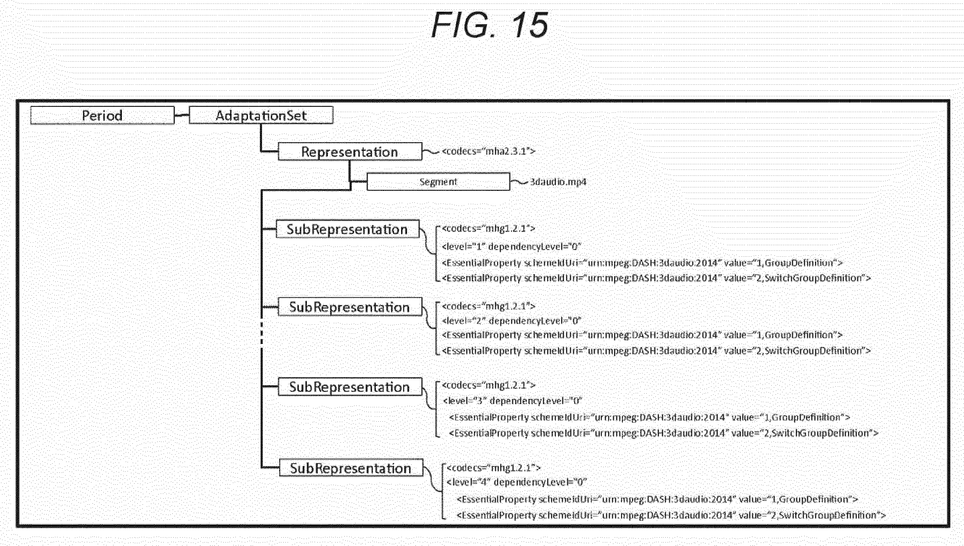

Fig. 15 is a diagram illustrating a first description example of the MPD file.

As illustrated in Fig. 15, in the MPD file, "Representation" that manages the segment of the audio file (3daudio.mp4) of the 3D audio, "SubRepresentation" that manages the track included in the segment, and the like are described.

The "Representation" and the "SubRepresentation" include "codecs" that indicates the kind (profile or level) of codec of the corresponding segment as a whole or the track in a 3D audio file format.

The "SubRepresentation" includes a "level" that is a value set in the level assignment box as a value that indicates the level of the corresponding track. "SubRepresentation" includes "dependencyLevel" that is a value indicating the level corresponding to another track (hereinafter, referred to as reference track) having the reference relationship (having dependency).

Further, the "SubRepresentation" includes <EssentialProperty schemeIdUri = "urn:mpeg:DASH:3daudio:2014" value = "dataType,definition">.

The "dataType" is a number that indicates a kind of content (definition) of the Audio Scene information described in the sample entry of the corresponding track, and the definition is its content. For example, in a case where GroupDefinition is included in the sample entry of the track, 1 is described as "dataType" of the track, and the GroupDefinition is described as "definition". Further, in a case where the SwitchGroupDefinition is included in the sample entry of the track, 2 is described as the "dataType" of the track, and the SwitchGroupDefinition is described as the "definition". That is, the "dataType" and the "definition" are information that indicates whether the SwitchGroupDefinition exists in the sample entry of the corresponding track. The "definition" is binary data, and is encoded by a base64 method.

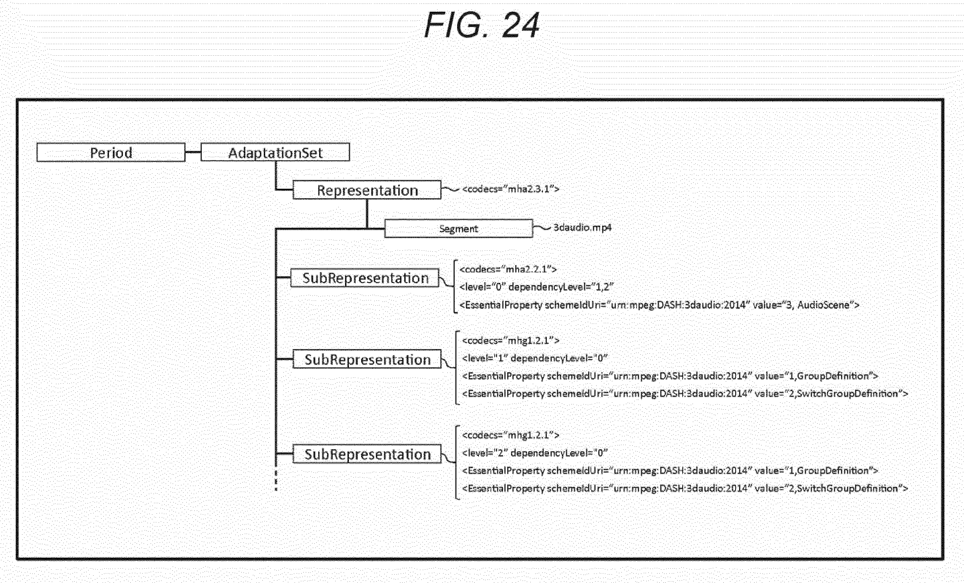

Note that, in the example of Fig. 15, all of the groups form the switch Group. However, in a case where a group that does not form the switch Group exists, <EssentialProperty schemeIdUri = "urn:mpeg:DASH:3daudio:2014" value = "2,SwitchGroupDefinition"> is not described in "SubRepresentation" corresponding to the group. The same applies to Figs. 24, 25, 31, 39, 45, 47, 48, and 50, described below.

### (Configuration Example of File Generation Device)

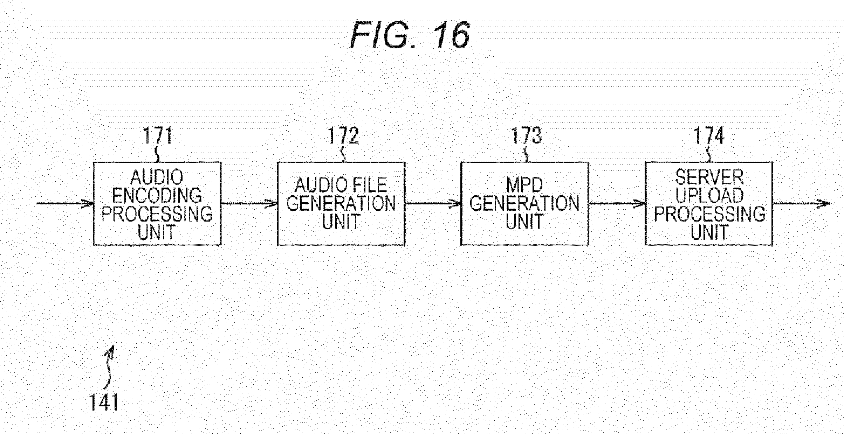

Fig. 16 is a block diagram illustrating a configuration example of the file generation device 141 of Fig. 8.

The file generation device 141 of Fig. 16 is configured from an audio encoding processing unit 171, an audio file generation unit 172, an MPD generation unit 173, and a server upload processing unit 174.

The audio encoding processing unit 171 of the file generation device 141 encodes the audio data and the metadata of the 3D audio of the moving image content at a plurality of encoding speeds to generate the audio streams. The audio encoding processing unit 171 supplies the audio stream of each encoding speed to the audio file generation unit 172.

The audio file generation unit 172 allocates the track to the audio stream supplied from the audio encoding processing unit 171 for each group and each type of the Extelement. The audio file generation unit 172 generates the audio file in the segment structure of Fig. 12 or 13, in which the audio streams of the tracks are arranged in units of the subsegment, for each encoding speed and segment. The audio file generation unit 172 supplies the generated audio file to the MPD generation unit 173.

The MPD generation unit 173 determines the URL of the web server 142 in which the audio file supplied from the audio file generation unit 172 is to be stored, and the like. Then, the MPD generation unit 173 generates the MPD file in which the URL of the audio file and the like are arranged in the "Segment" of the "Representation" for the audio file. The MPD generation unit 173 supplies the generated MPD file and the audio file to the server upload processing unit 174.

The server upload processing unit 174 uploads the audio file and the MPD file supplied from the MPD generation unit 173 onto the web server 142.

### (Description of Processing of File Generation Device)

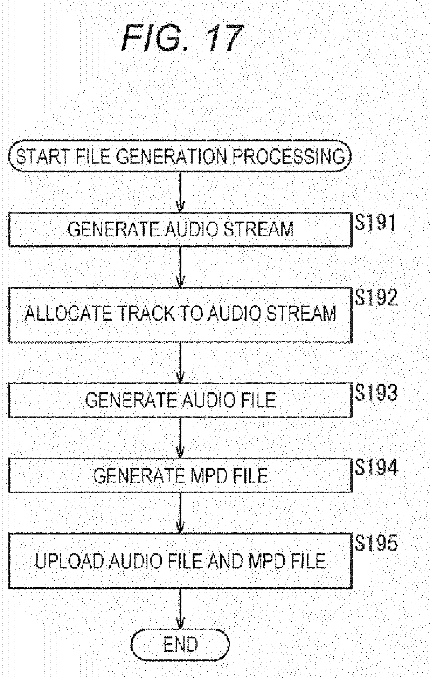

Fig. 17 is a flowchart for describing file generation processing of the file generation device 141 of Fig. 16.

In step S191 of Fig. 17, the audio encoding processing unit 171 encodes the audio data and the metadata of the 3D audio of the moving image content at a plurality of encoding speeds to generate the audio streams. The audio encoding processing unit 171 supplies the audio stream of each encoding speed to the audio file generation unit 172.

In step S192, the audio file generation unit 172 allocates the track to the audio stream supplied from the audio encoding processing unit 171 for each group and each type of the Extelement.

In step S193, the audio file generation unit 172 generates the audio file in the segment structure of Fig. 12 or 13, in which the audio streams of the tracks are arranged in units of the subsegment, for each encoding speed and segment. The audio file generation unit 172 supplies the generated audio file to the MPD generation unit 173.

In step S194, the MPD generation unit 173 generates the MPD file including the URL of the audio file and the like. The MPD generation unit 173 supplies the generated MPD file and the audio file to the server upload processing unit 174.

In step S195, the server upload processing unit 174 uploads the audio file and the MPD file supplied from the MPD generation unit 173 onto the web server 142. Then, the processing is terminated.

### (Functional Configuration Example of Moving Image Reproduction Terminal)

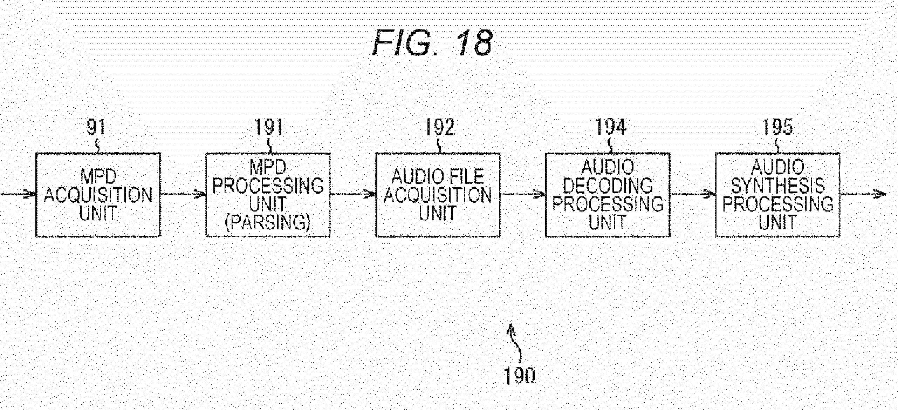

Fig. 18 is a block diagram illustrating a configuration example of a streaming reproduction unit realized such that the moving image reproduction terminal 144 of Fig. 8 executes the control software 161, the moving image reproduction software 162, and the access software 163.

A streaming reproduction unit 190 of Fig. 18 is configured from an MPD acquisition unit 91, an MPD processing unit 191, an audio file acquisition unit 192, an audio decoding processing unit 194, and an audio synthesis processing unit 195.

The MPD acquisition unit 91 of the streaming reproduction unit 190 acquires the MPD file from the web server 142, and supplies the MPD file to the MPD processing unit 191.

The MPD processing unit 191 extracts the information of the URL of the audio file of the segment to be reproduced described in the "Segment" for the audio file, and the like, from the MPD file supplied from the MPD acquisition unit 91, and supplies the information to the audio file acquisition unit 192.

The audio file acquisition unit 192 requests the web server 142 and acquires the audio stream of the track to be reproduced in the audio file identified with the URL supplied from the MPD processing unit 191. The audio file acquisition unit 192 supplies the acquired audio stream to the audio decoding processing unit 194.

The audio decoding processing unit 194 decodes the audio stream supplied from the audio file acquisition unit 192. The audio decoding processing unit 194 supplies the audio data obtained as a result of the decoding to the audio synthesis processing unit 195. The audio synthesis processing unit 195 synthesizes the audio data supplied from the audio decoding processing unit 194, as needed, and outputs the audio data.

As described above, the audio file acquisition unit 192, the audio decoding processing unit 194, and the audio synthesis processing unit 195 function as a reproduction unit, and acquire and reproduce the audio stream of the track to be reproduced from the audio file stored in the web server 142.

### (Description of Processing of Moving Image Reproduction Terminal)

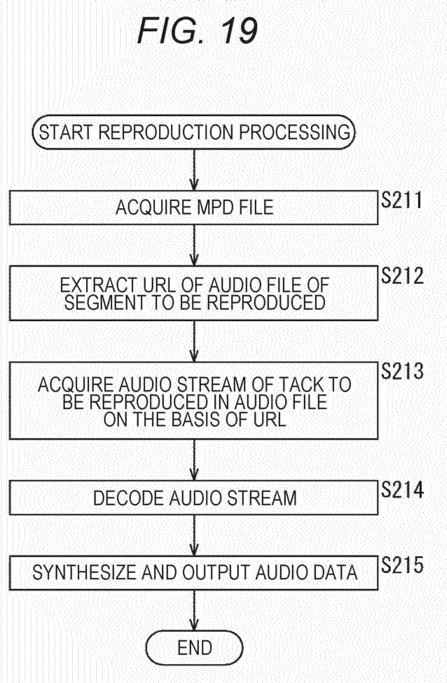

Fig. 19 is a flowchart for describing reproduction processing of the streaming reproduction unit 190 of Fig. 18.

In step S211 of Fig. 19, the MPD acquisition unit 91 of the streaming reproduction unit 190 acquires the MPD file from the web server 142, and supplies the MPD file to the MPD processing unit 191.

In step S212, the MPD processing unit 191 extracts the information of the URL of the audio file of the segment to be reproduced described in the "Segment" for the audio file, and the like, from the MPD file supplied from the MPD acquisition unit 91, and supplies the information to the audio file acquisition unit 192.

In step S213, the audio file acquisition unit 192 requests the web server 142 and acquires the audio stream of the track to be reproduced in the audio file identified by the URL on the basis of the URL supplied from the MPD processing unit 191. The audio file acquisition unit 192 supplies the acquired audio stream to the audio decoding processing unit 194.

In step S214, the audio decoding processing unit 194 decodes the audio stream supplied from the audio file acquisition unit 192. The audio decoding processing unit 194 supplies the audio data obtained as a result of the decoding to the audio synthesis processing unit 195. In step S215, the audio synthesis processing unit 195 synthesizes the audio data supplied from the audio decoding processing unit 194, as needed, and outputs the audio data.

### (Outline of Second Example of Track of Audio File)

Note that, in the above description, the GroupDefinition and the SwitchGroupDefinition are arranged in the sample entry. However, as illustrated in Fig. 20, the GroupDefinition and the SwitchGroupDefinition may be arranged in sample group entry that is the sample entry of each group of a subsample in the track.

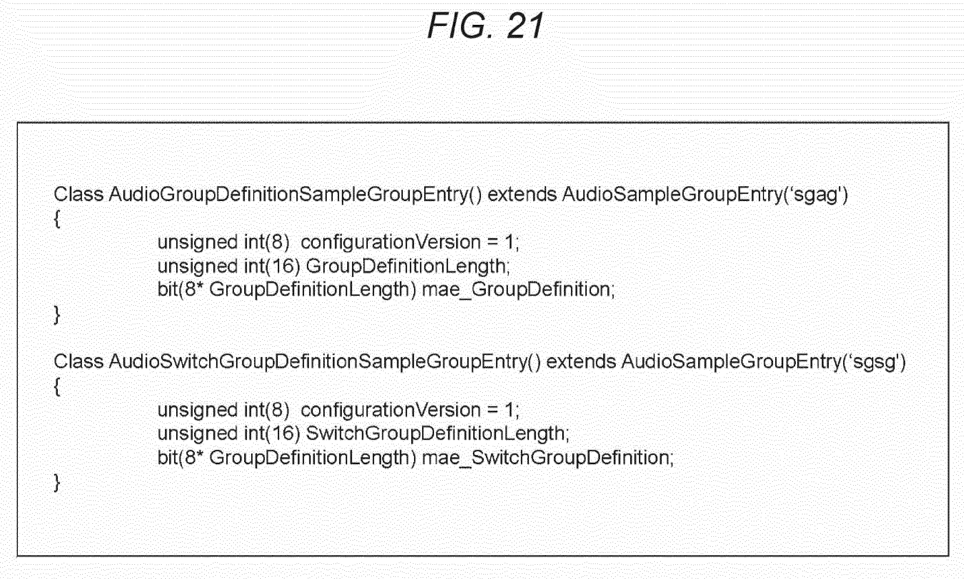

In this case, as illustrated in Fig. 21, the sample group entry of the track of the group that forms the switch Group includes the GroupDefinition and the SwitchGroupDefinition. Although illustration is omitted, the sample group entry of the track of the group that does not form the switch Group includes only the GroupDefinition.

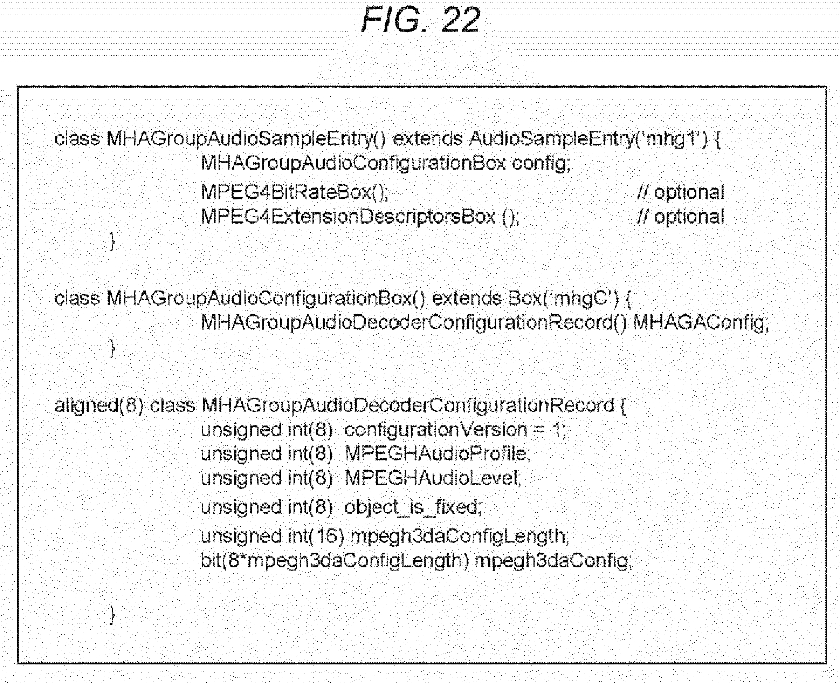

Further, the sample entry of the track of each of the groups becomes one illustrated in Fig. 22. That is, as illustrated in Fig. 22, in the sample entry of the track of each of the groups, MHAGroupAudioConfigrationBox in which Config information such as a profile (MPEGHAudioProfile) of the audio stream of the corresponding track, a level (MPEGHAudioLevel), and the like are described.

### (Outline of Third Example of Track of Audio File)

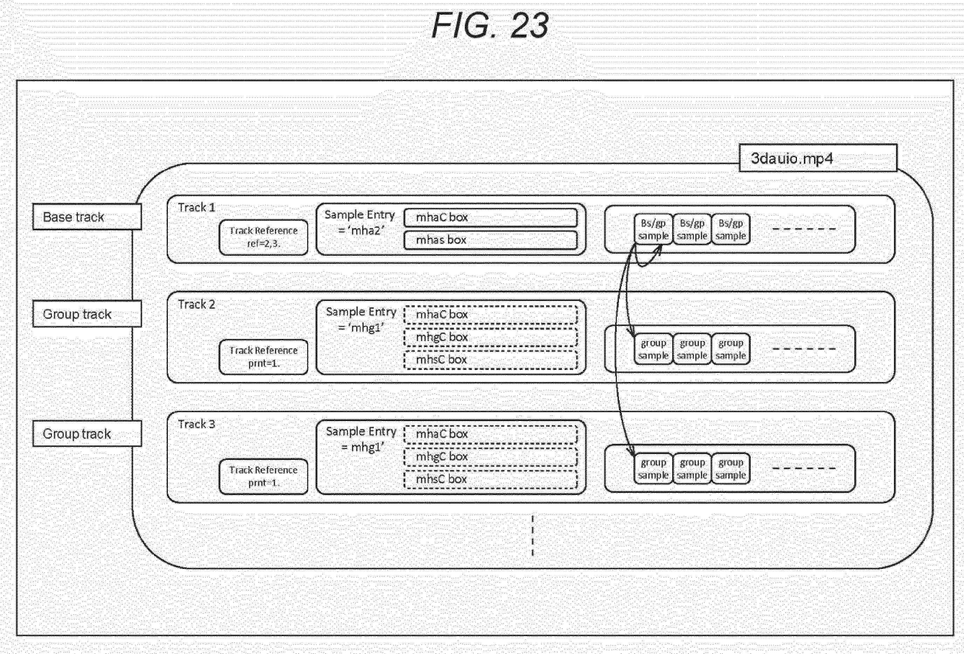

Fig. 23 is a diagram for describing an outline of a third example of the track of the audio file.

The configuration of the track of the audio data of Fig. 23 is different from the configuration of Fig. 9 in that the audio streams of one or more groups of the 3D audio are included in the base track, and the number of groups corresponding to the audio streams divided into the tracks (hereinafter, referred to as group tracks) that do not include the information related to the 3D audio as a whole is 1 or more.

That is, the sample entry of the base track of Fig. 23 is the sample entry with the 4cc of "mha2", which includes the syntax for base track of when the audio streams of the audio data, of the 3D audio, are divided into a plurality of tracks and arranged, similarly to Fig. 9 (Fig. 10).

Further, the sample entry of the group track is the sample entry with the 4cc of "mhg1", which includes the syntax for group track of when the audio streams of the audio data, of the 3D audio, are divided into a plurality of tracks and arranged, similarly to Fig. 9 (Fig. 11). Therefore, the base track and the group track are identified with the 4cc of the sample entry, and dependency between the tracks can be recognized.

Further, similarly to Fig. 9, the Track Reference is arranged in the track box of each of the tracks. Therefore, even in a case where which of "mha2" and "mhg1" is the 4cc of the sample entry of the base track or the group track is unknown, the dependency between the tracks can be recognized with the Track Reference.

Note that the mhgC box and the mhsC box may not be described in the sample entry of the group track. Further, in a case where the mhaC box including the config information of all of the groups of the 3D audio is described in the sample entry of the base track, the mhaC box may not be described in the sample entry of the group track. However, in a case where the mhaC box including the config information that can independently reproduce the base track is described in the sample entry of the base track, the mhaC box including the config information that can independently reproduce the group track is described in the sample entry of the group track. Whether it is in the former state or in the latter state can be recognized according to existence/non-existence of the config information in the sample entry. However, the recognition can be made by describing a flag in the sample entry or by changing the type of the sample entry. Note that, although illustration is omitted, in a case of making the former state and the latter state recognizable by changing the type of the sample entry, the 4cc of the sample entry of the base track is "mha2" in the case of the former state, and is "mha4" in the case of the latter state.

### (Second Description Example of MPD File)

Fig. 24 is a diagram illustrating a description example of the MPD file in a case where the configuration of the tracks of the audio file is the configuration of Fig. 23.

The MPD file of Fig. 24 is different from the MPD file of Fig. 15 in that the "SubRepresentation" of the base track is described.

In the "SubRepresentation" of the base track, the "codecs", the "level", the "dependencyLevel" of the base track, and <EssentialProperty schemeIdUri = "urn:mpeg:DASH:3daudio:2014" value = "dataType,definition"> are described, similarly to the "SubRepresentation" of the group track.

In the example of Fig. 24, the "codecs" of the base track is "mha2.2.1", and the "level" is "0" as a value that indicates the level of the base track. The "dependencyLevel" is "1" and "2" as values that indicate the levels of the group track. Further, the "dataType" is "3" as a number that indicates the AudioScene information as a kind described in the mhas box of the sample entry of the base track, and the "definition" is binary data of the AudioScene information encoded by the base64 method.

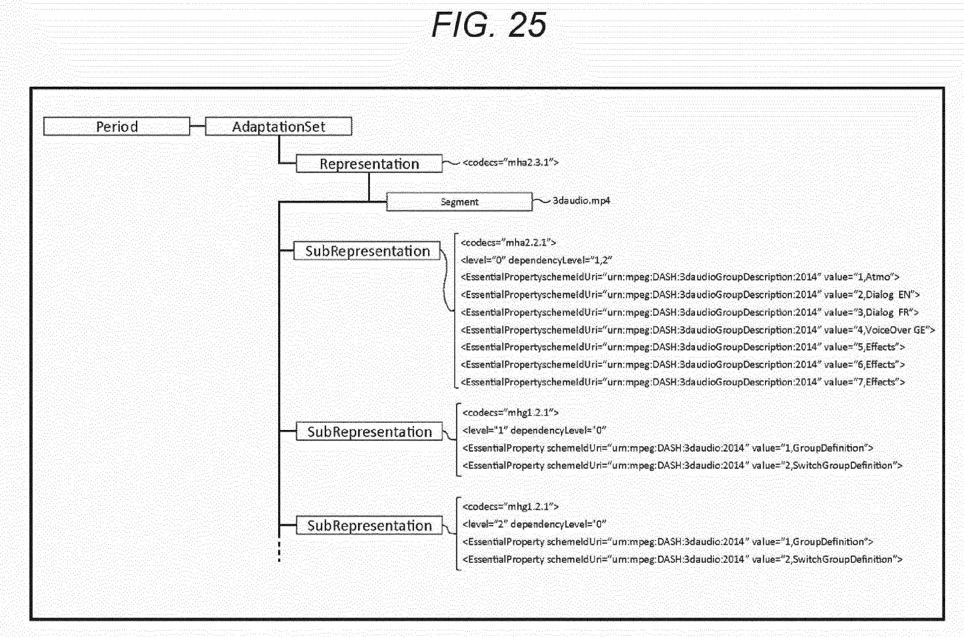

Note that, as illustrated in Fig. 25, in the "SubRepresentation" of the base track, the AudioScene information may be divided and described.

In the example of Fig. 25, "1" is set as a number that indicates "Atmo" as a kind, "Atmo" indicating content of the group with the group ID "1", of the AudioScene information (Fig. 7) described in the mhas box of the sample entry of the base track.

Further, "2" to "7" are set as numbers that respectively indicate, as kinds, "Dialog EN" that indicates the content of the group with the group ID "2", "Dialog FR" that indicates the content of the group with the group ID "3", "VoiceOver GE" that indicates the content of the group with the group ID "4", "Effects" that indicates the content of the group with the group ID "5", "Effect" that indicates the content of the group with the group ID "6", and "Effect" that indicates the content of the group with the group ID "7".

Therefore, in the "SubRepresentation" of the base track of Fig. 25, <EssentialProperty schemeIdUri = "urn:mpeg:DASH:3daudio:2014" value = "dataType,definition"> in which the "dataType" is "1" and the "definition" is "Atmo" is described. Similarly, "urn:mpeg:DASH:3daudio:2014" value = "dataType,definition"> in which the "dataType" is "2", "3", "4", "5", "6", and "7", and the "definition" is "Dialog EN", "Dialog FR", "VoiceOver GE", "Effects", "Effect", and "Effect" is described. In the example of Fig. 25, a case in which the AudioScene information of the base track is divided and described has been described. However, the GroupDefinition and the SwitchGroupDefinition of the group track may be similarly divided and described.

### (Outline of Fourth Example of Track of Audio File)

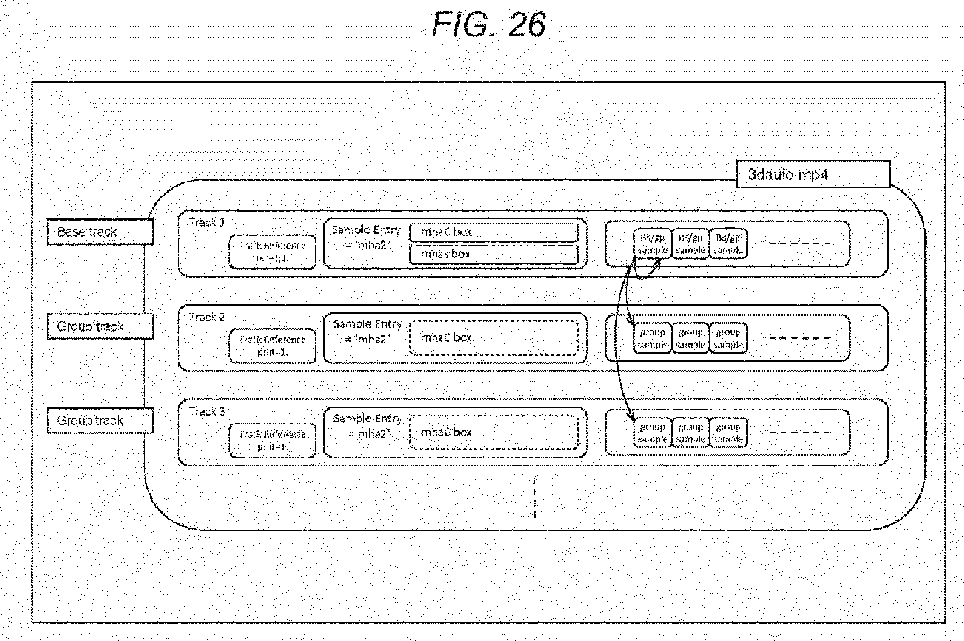

Fig. 26 is a diagram for describing an outline of a fourth example of the track of the audio file.

The configuration of the track of the audio data of Fig. 26 is different from the configuration of Fig. 23 in that the sample entry of the group track is the sample entry with the 4cc of "mha2".

In the case of Fig. 26, both of the 4ccs of the sample entries of the base track and the group track are "mha2" . Therefore, the base track and the group track cannot be identified and the dependency between the tracks cannot be recognized with the 4cc of the sample entry. Therefore, the dependency between the tracks is recognized with the Track Reference arranged in the track box of each of the tracks.

Further, because the 4ccs of the sample entries are "mha2", the corresponding track being the track of when the audio streams of the audio data, of the 3D audio, are divided and arranged in a plurality of tracks, can be recognized.

Note that, in the mhaC box of the sample entry of the base track, the config information of all of the groups of the 3D audio or the config information that can independently reproduce the base track is described, similarly to the cases of Figs. 9 and 23. Further, in the mhas box, the AudioScene information including the information related to all of the groups and the switch Group of the 3D audio is described.

Meanwhile, in the sample entry of the group track, the mhas box is not arranged. Further, in a case where the mhaC box including the config information of all of the groups of the 3D audio is described in the sample entry of the base track, the mhaC box may not be described in the sample entry of the group track. However, in a case where the mhaC box including the config information that can independently reproduce the base track is described in the sample entry of the base track, the mhaC box including the config information that can independently reproduce the base track is described in the sample entry of the group track. Whether it is in the former state or in the latter state can be recognized according to existence/non-existence of the config information in the sample entry. However, the former state and the latter state can be identified by describing a flag in the sample entry or by changing the type of the sample entry. Note that, although illustration is omitted, in a case of making the former state and the latter state recognizable by changing the type of the sample entry, the 4cc of the sample entry of the base track and the 4cc of the sample entry of the group track are, for example, "mha2" in the case of the former state, and "mha4" in the case of the latter state.

### (Third Description Example of MPD File)

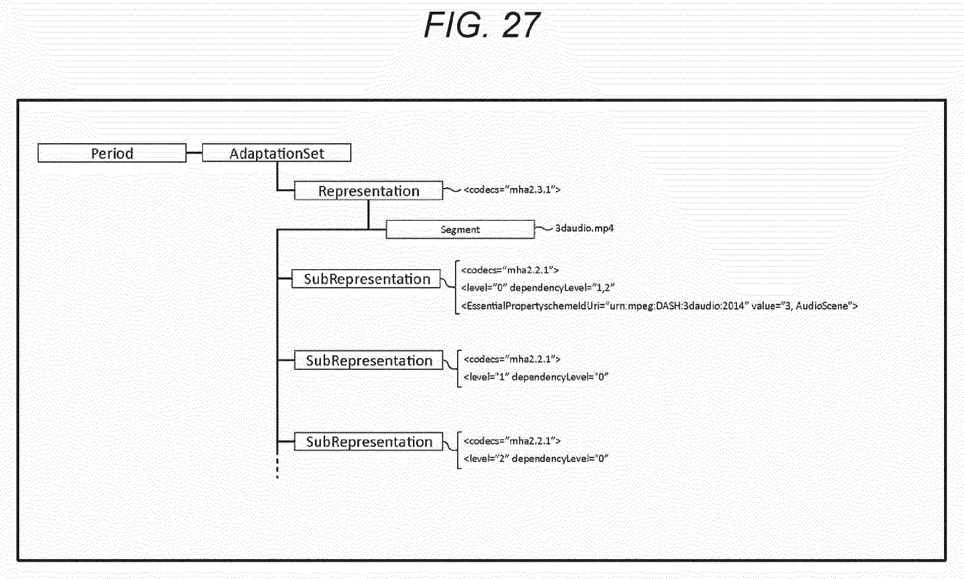

Fig. 27 is a diagram illustrating a description example of the MPD file in a case where the configuration of the tracks of the audio file is the configuration of Fig. 26.

The MPD file of Fig. 27 is different from the MPD file of Fig. 24 in that the "codecs" of the "SubRepresentation" of the group track is "mha2.2.1", and <EssentialProperty schemeIdUri = "urn:mpeg:DASH:3daudio:2014" value = "dataType,definition"> is not described in the "SubRepresentation" of the group track.

Note that, although illustration is omitted, the AudioScene information may be divided and described in the "SubRepresentation" of the base track, similarly to the case of Fig. 25.

### (Outline of Fifth Example of Track of Audio File)

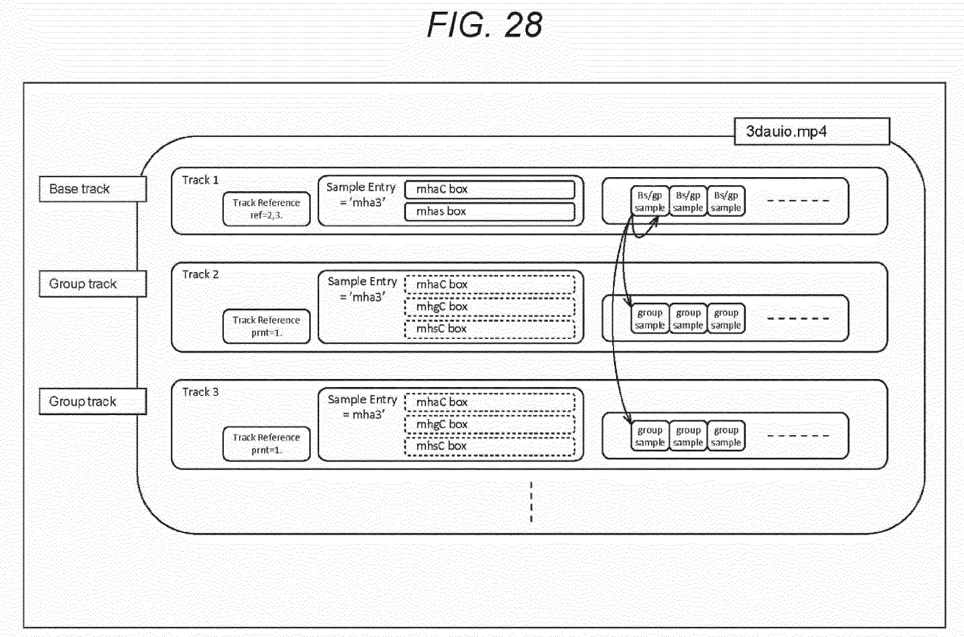

Fig. 28 is a diagram for describing an outline of a fifth example of the track of the audio file.

The configuration of the tracks of the audio data of Fig. 28 is different from the configuration of Fig. 23 in that the sample entries of the base track and the group track are the sample entry including syntax suitable for both of the base track and the group track of a case where the audio streams of the audio data, of the 3D audio, are divided into the plurality of tracks.

In the case of Fig. 28, both of the 4ccs of the sample entries of the base track and the group track are "mha3" that is the 4cc of the sample entry including the syntax suitable for both of the base track and the group track.

Therefore, similarly to the case of Fig. 26, the dependency between the tracks is recognized with the Track Reference arranged in the track box in each of the tracks. Further, because the 4ccs of the sample entries are "mha3", the corresponding track being the track of when the audio streams of the audio data, of the 3D audio, are divided into the plurality of tracks and arranged can be recognized.

### (Example of Syntax of Sample Entry Where 4cc is "mha3")

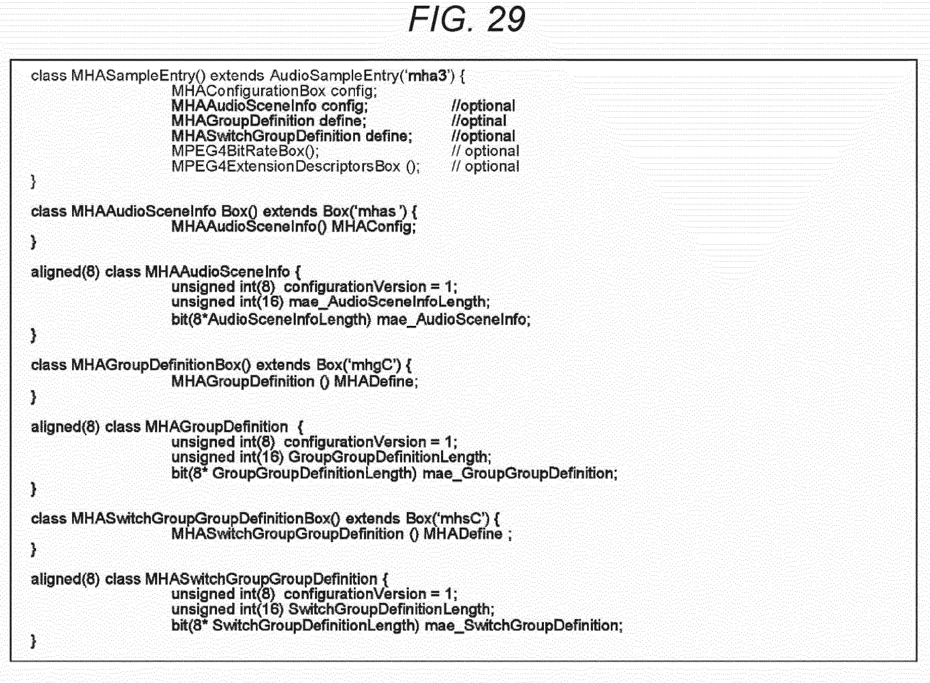

Fig. 29 is a diagram illustrating an example of the syntax of the sample entry with the 4cc of "mha3".

As illustrated in Fig. 29, the syntax of the sample entry with the 4cc of "mha3" is syntax obtained by synthesizing the syntax of Fig. 10 and the syntax of Fig. 11.

That is, in the sample entry with the 4cc of "mha3", the mhaC box (MHAConfigration Box), the mhas box (MHAAudioSceneInfo Box), the mhgC box (MHAGroupDefinitionBox), the mhsC box (MHASwitchGropuDefinition Box), and the like are arranged.

In the mhaC box of the sample entry of the base track, the config information of all of the groups of the 3D audio or the config information that can independently reproduce the base track is described. Further, in the mhas box, the AudioScene information including the information related to all of the groups and the switch Group of the 3D audio is described, and the mhgC box and the mhsC box are not arranged.

In a case where the mhaC box including the config information of all of the groups of the 3D audio is described in the sample entry of the base track, the mhaC box may not be described in the sample entry of the group track. However, in a case where the mhaC box including the config information that can independently reproduce the base track is described in the sample entry of the base track, the mhaC box including the config information that can independently reproduce the group track is described in the sample entry of the group track. Whether it is in the former state or in the latter state can be recognized according to existence/non-existence of the config information in the sample entry. However, the former state and the latter state can be recognized by describing a flag in the sample entry, or by changing the type of the sample entry. Note that, although illustration is omitted, in a case of making the former state and the latter state recognizable by changing the type of the sample entry, the 4ccs of the sample entries of the base track and the group track are, for example, "mha3" in the case of the former state, and are "mha5" in the case of the latter state. Further, the mhas box is not arranged in the sample entry of the group track. The mhgC box and the mhsC box may be or may not be arranged.

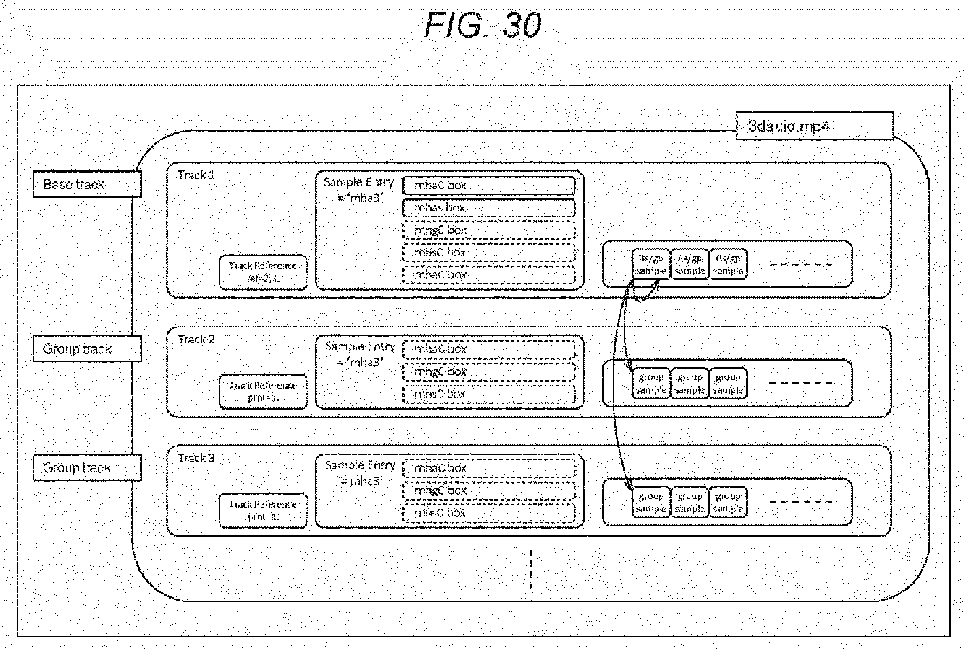

Note that, as illustrated in Fig. 30, in the sample entry of the base track, the mhas box, the mhgC box, and the mhsC box are arranged, and both of the mhaC box in which config information that can independently reproduce only the base track is described and the mhaC box including the config information of all of the groups of the 3D audio may be arranged. In this case, the mhaC box in which the config information of all of the groups of the 3D audio are described, and the mhaC box in which config information that can independently reproduce only the base track is described are recognized with flags included in these mhaC boxes. Further, in this case, the mhaC box may not be described in the sample entry of the group track. Whether the mhaC box is described in the sample entry of the group track can be recognized according to existence/non-existence of the mhaC box in the sample entry of the group track. However, whether the mhaC box is described in the sample entry of the group track can be recognized by describing a flag in the sample entry, or by changing the type of the sample entry. Note that, although illustration is omitted, in a case of making whether the mhaC box is described in the sample entry of the group track recognizable by changing the type of the sample entry, the 4ccs of the sample entries of the base track and the group track are, for example, "mha3" in a case where the mhaC box is described in the sample entry of the group track, and are "mha5" in a case where the mhaC box is not described in the sample entry of the group track. Note that, in Fig. 30, the mhgC box and the mhsC box may not be described in the sample entry of the base track.

### (Fourth Description Example of MPD file)

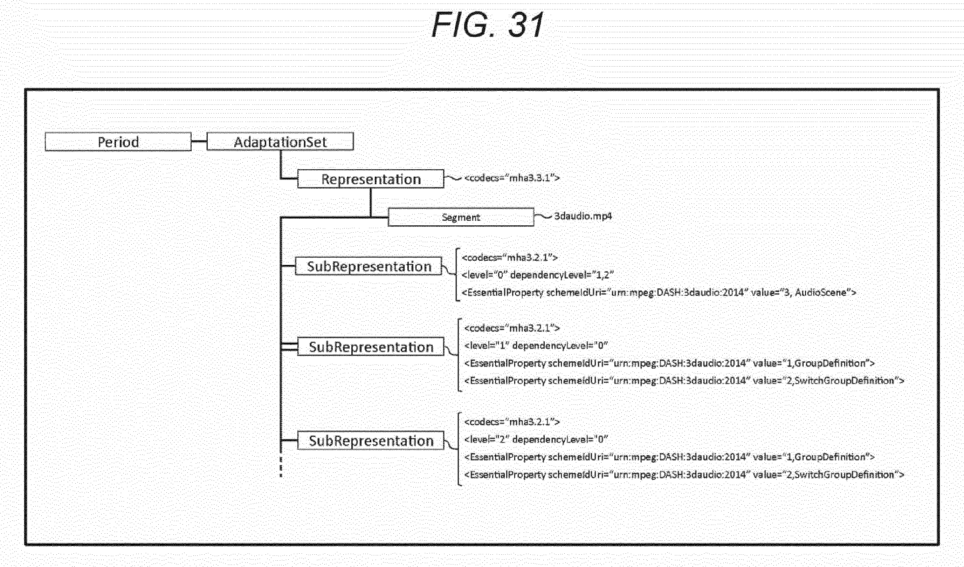

Fig. 31 is a diagram illustrating a description example of the MPD file in a case where the configuration of the tracks of the audio file is the configuration of Fig. 28 or 30.

The MPD file of Fig. 31 is different from the MPD file of Fig. 24 in that the "codecs" of the "Representation" is "mha3.3.1", and the "codecs" of the "SubRepresentation" is "mha3.2.1".

Note that, although illustration is omitted, the AudioScene information may be divided and described in the "SubRepresentation" of the base track, similarly to the case of Fig. 25.

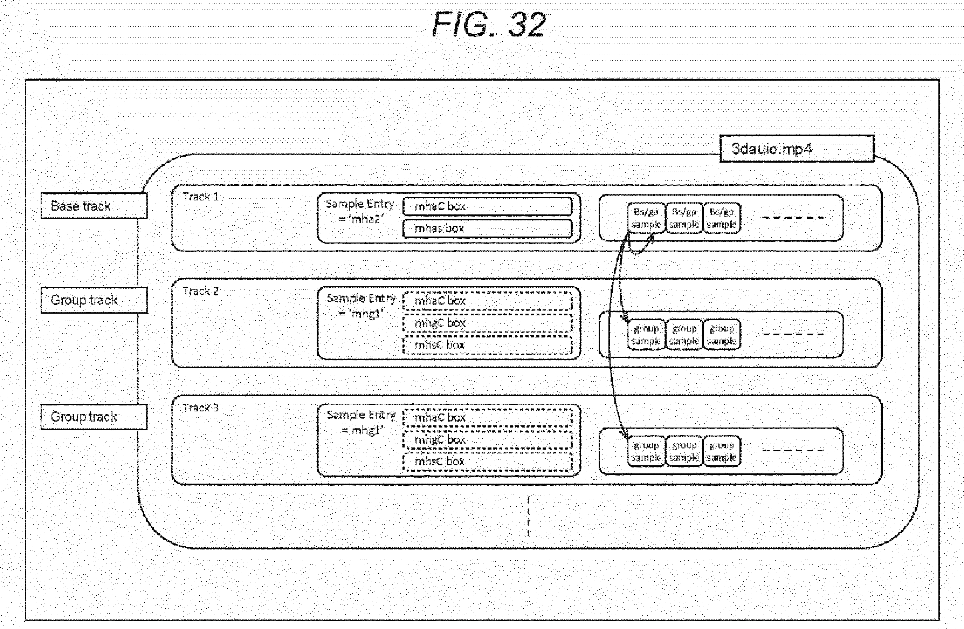

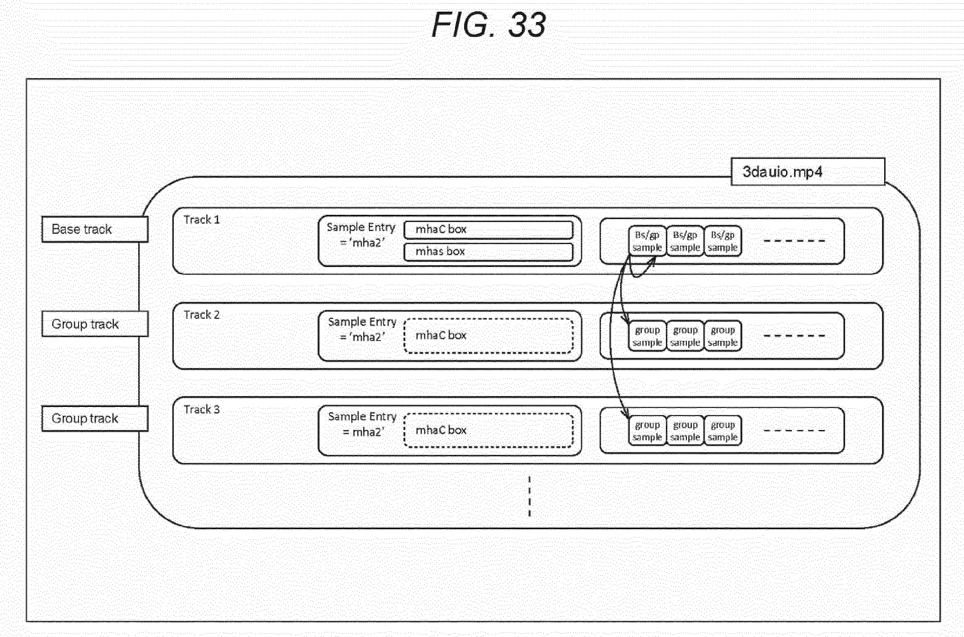

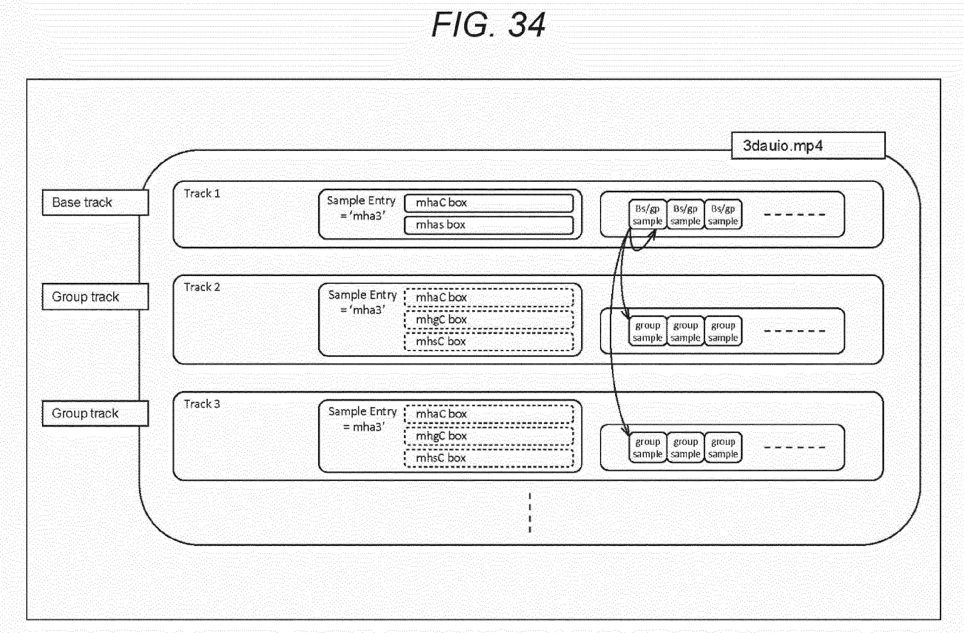

Further, in the above-description, the Track Reference is arranged in the track box in each of the tracks. However, the Track Reference may not be arranged. For example, Figs. 32 to 34 are diagrams respectively illustrating cases in which the Track Reference is not arranged in the track boxes of the tracks of the audio files of Figs. 23, 26, and 28. In the case of Fig. 32, the Track Reference is not arranged, but the 4ccs of the sample entries of the base track and the group track are different, and thus the dependency between the tracks can be recognized. In the cases of Figs. 33 and 34, because the mhas box is arranged, whether the track is the base track can be recognized.

The MPD files of the cases where the configurations of the tracks of the audio file are the configurations of Figs. 32 to 34 are respectively the same as the MPD files of Figs. 24, 27, and 31. Note that, in this case, the AudioScene information may be divided and described in the "SubRepresentation" of the base track, similarly to the case of Fig. 25.

### (Outline of Sixth Example of Track of Audio File)

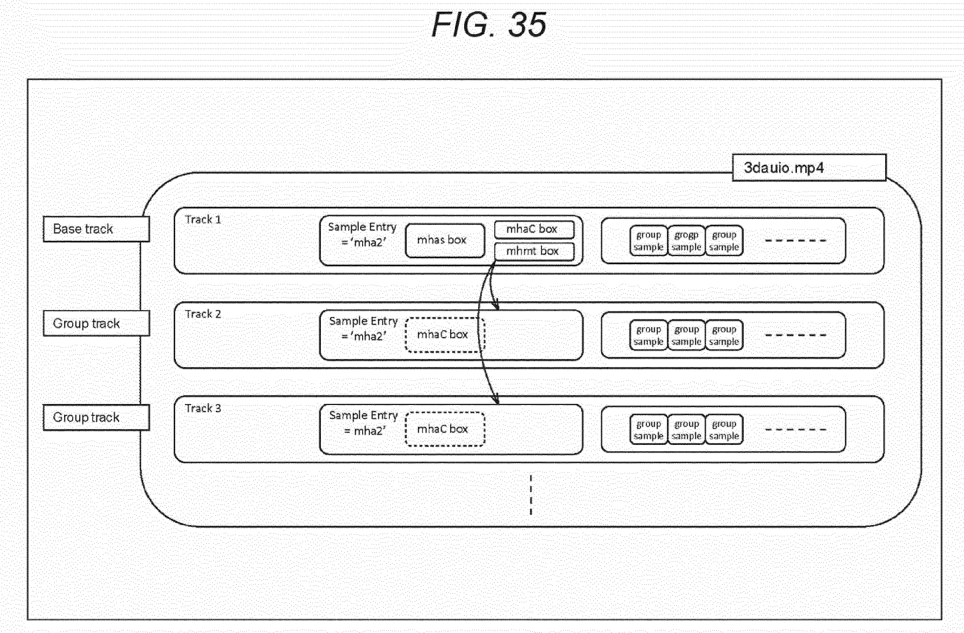

Fig. 35 is a diagram for describing an outline of a sixth example of the track of the audio file.

The configuration of the tracks of the audio data of Fig. 35 is different from the configuration of Fig. 33 in that the reference information to the samples of the tracks of the groups and the config information necessary for decoding the reference information are not arranged in the sample of the base track, the audio streams of 0 or more groups are included, and the reference information to the samples of the tracks of the groups is described in the sample entry of the base track.

To be specific, an mhmt box that describes which tracks the groups described in the AudioScene information are divided into is newly arranged in the sample entry with the 4cc of "mha2", which includes the syntax for base track of when the audio streams of the audio data, of the 3D audio, are divided into a plurality of tracks.

### (Another Example of Syntax of Sample Entry with 4cc of "mha2")

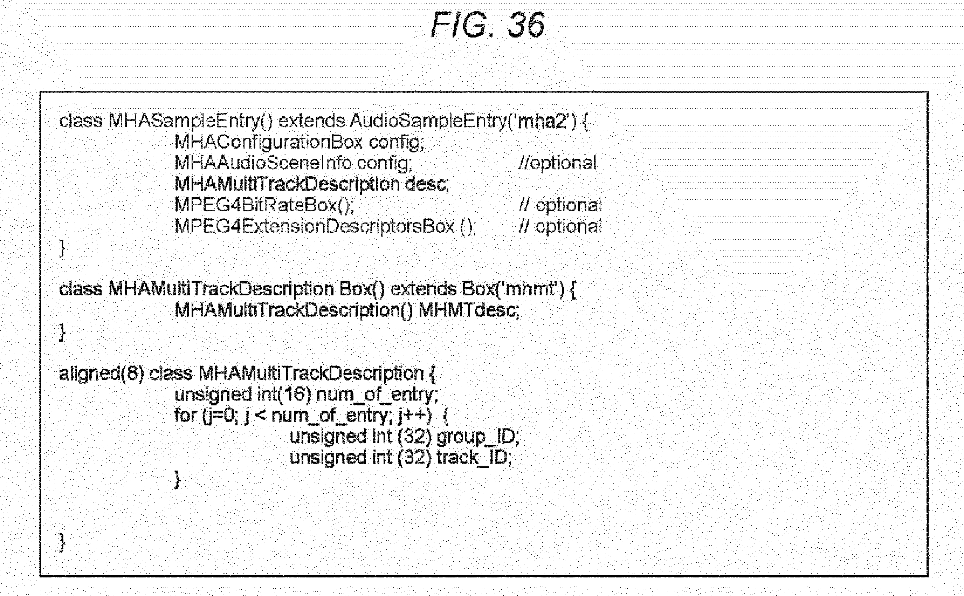

Fig. 36 is a diagram illustrating an example of syntax of the sample entries of the base track and the group track of Fig. 35 where the 4cc is "mha2".

The configuration of the sample entry with the 4cc of "mha2" of Fig. 36 is different from the configuration of Fig. 10 in that an MHAMultiTrackDescription box (mhmt box) is arranged.

In the mhmt box, as the reference information, corresponding relationship between the group ID (group_ID) and the track ID (track_ID) is described. Note that, in the mhmt box, the audio element and the track ID may be described in association with each other.

In a case where the reference information is not changed in each sample, the reference information can be efficiently described by arranging the mhmt box in the sample entry.

Note that, although illustration is omitted, in the cases of Figs. 9, 20, 23, 26, 28, 30, 32, and 34, the mhmt box can be similarly arranged in the sample entry of the back track, instead of describing the reference information to the samples of the tracks of the groups, to the sample of the base track.

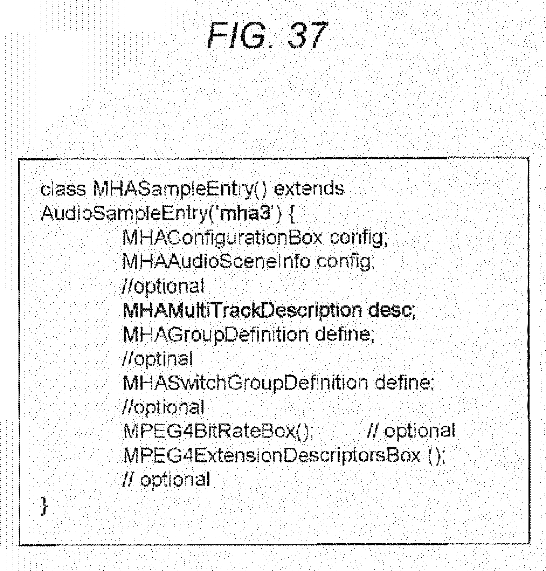

In this case, the syntax of the sample entry with the 4cc of "mha3" becomes one illustrated in Fig. 37. That is, the configuration of the sample entry with the 4cc of "mha3" of Fig. 37 is different from the configuration of Fig. 29 in that the MHAMult iTrackDescript ion box (mhmt box) is arranged.

Further, in Figs. 23, 26, 28, 30, 32 to 34, and 35, the audio streams of one or more groups of the 3D audio may not be included in the base track, similarly to Fig. 9. Further, the number of the groups corresponding to the audio streams divided into the group tracks may be 1.

Further, in Figs. 23, 26, 28, 30, 32 to 34, and 35, the GroupDefinition and the SwitchGroupDefinition may be arranged in the sample group entry, similarly to the case of Fig. 20.

### <Second Embodiment>

### (Outline of Track)

Fig. 38 is a diagram for describing an outline of tracks in a second embodiment to which the present disclosure is applied.

As illustrated in Fig. 38, the second embodiment is different from the first embodiment in that the tracks are recorded as different files (3da_base.mp4/3da_group1.mp4/3da_group2.mp4/3da_group3.mp4/3da_g roup 4.mp4). In this case, by acquiring a file of a desired track through an HTTP, only data of the desired track can be acquired. Therefore, the data of the desired track through the HTTP can be efficiently acquired.

### (Description Examples of MPD file)

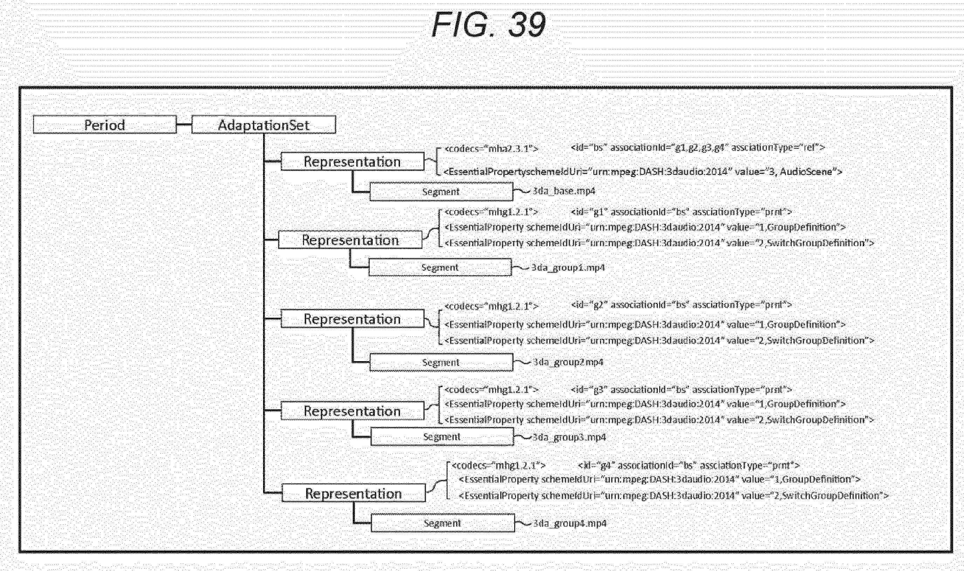

Fig. 39 is a diagram illustrating description examples of the MPD file in the second embodiment to which the present disclosure is applied.

As illustrated in Fig. 39, in an MPD file, "Representation" that manages segments of the audio files (3da_base.mp4/3da_group1.mp4/3da_group2.mp4/3da_group3.mp4/3da_g roup 4.mp4) of 3D audio, and the like are described.

The "Representation" includes "codec", "id", "associationId", and "assciationType". The "id" is an ID of the "Representation" including the same. The "associationId" is information indicating reference relationship between corresponding track and another track, and is "id" of a reference track. The "assciationType" is a code indicating meaning of reference relationship (dependency) with the reference track, and for example, a value that is the same as a value of track reference of MP4 is used.

Further, the "Representation" of the tracks of groups include <EssentialProperty schemeIdUri = "urn:mpeg:DASH:3daudio:2014" value = "dataType,def inition">. In the example of Fig. 39, the "Representations" that manage the segments of the audio files are provided under one "AdaptationSet". However, the "AdaptationSet" may be provided for each of the segments of the audio files, and the "Representation" that manages the segment may be provided thereunder. In this case, in the "AdaptationSet", the "associationId" and <EssentialProperty schemeIdUri = "urn:mpeg:DASH:3daudioAssociationData:2014" value ="dataType,id"> indicating meaning of the reference relationship with the reference track may be described, similarly to the "assciationType". Further, AudioScene information, GroupDefinition, and SwitchGroupDefinition described in the "Representations" of a base track and a group track may be divided and described, similarly to the case of Fig. 25. Further, the AudioScene information, the GroupDefinition, and the SwitchGroupDefinition divided and described in the "Representations" may be described in the "AdaptationSets".

### (Outline of Information Processing System)

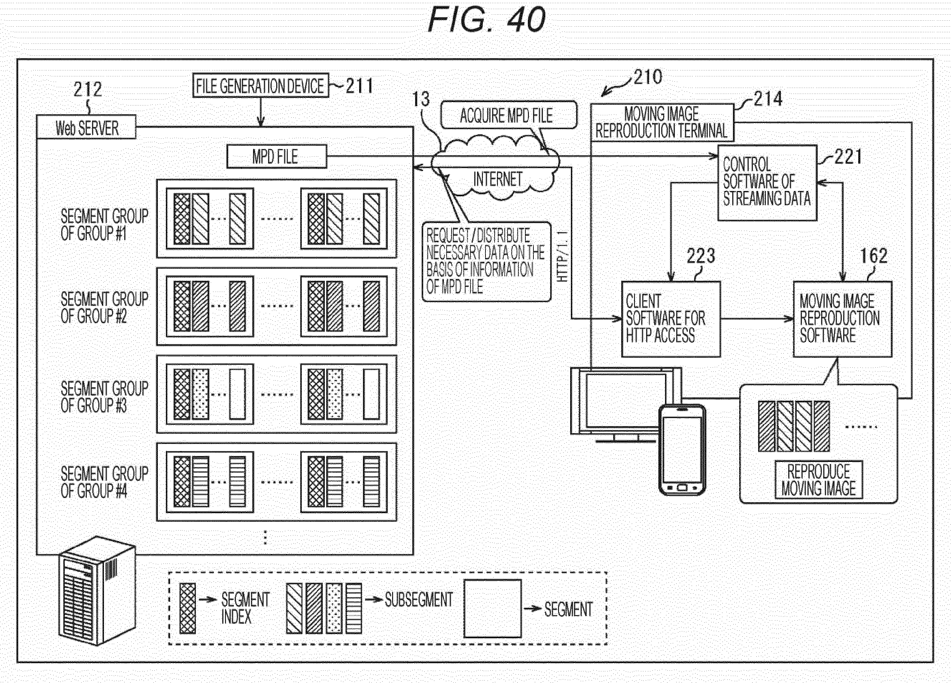

Fig. 40 is a diagram for describing an outline of an information processing system in the second embodiment to which the present disclosure is applied.

The same configurations, of configurations illustrated in Fig. 40, with the configurations of Fig. 8, are denoted with the same reference signs. Overlapping description is appropriately omitted.

An information processing system 210 of Fig. 40 is configured such that a web server 212 connected to a file generation device 211 is connected with a moving image reproduction terminal 214 through the Internet 13.

In the information processing system 210, the web server 142 distributes an audio stream of the audio file of the group to be reproduced to the moving image reproduction terminal 144 by a method conforming to MPEG-DASH.

To be specific, the file generation device 211 encodes audio data and metadata of the 3D audio of moving image content at a plurality of encoding speeds to generate the audio streams. The file generation device 211 divides the audio streams for each group and each type of Extelement to have the audio streams in different tracks. The file generation device 211 makes files of the audio streams at each encoding speed, for each segment, and for each track, to generate the audio files. The file generation device 211 uploads the audio files obtained as a result onto the web server 212. Further, the file generation device 211 generates an MPD file and uploads the MPD file onto the web server 212.

The web server 212 stores the audio files at each encoding speed, for each segment, and for each track, and the MPD file uploaded from the file generation device 211. The web server 212 transmits the stored audio files, the stored MPD file, and the like to the moving image reproduction terminal 214, in response to a request from the moving image reproduction terminal 214.

The moving image reproduction terminal 214 executes control software 221, moving image reproduction software 162, access software 223, and the like.

The control software 221 is software that controls data streamed from the web server 212. To be specific, the control software 221 causes the moving image reproduction terminal 214 to acquire the MPD file from the web server 212.

Further, the control software 221 commands the access software 223 to send a transmission request of the group to be reproduced specified with the moving image reproduction software 162, and the audio stream of the audio file of the type of Extelement corresponding to the group, on the basis of the MPD file.

The access software 223 is software that controls communication between the moving image reproduction terminal 214 and the web server 212 through the Internet 13 using the HTTP. To be specific, the access software 223 causes the moving image reproduction terminal 144 to transmit a transmission request of the audio stream of the audio file to be reproduced in response to the command of the control software 221. Further, the access software 223 causes the moving image reproduction terminal 144 to start reception of the audio stream transmitted from the web server 212, in response to the transmission request, and supplies notification of the reception start to the moving image reproduction software 162.

### (Configuration Example of File Generation Device)

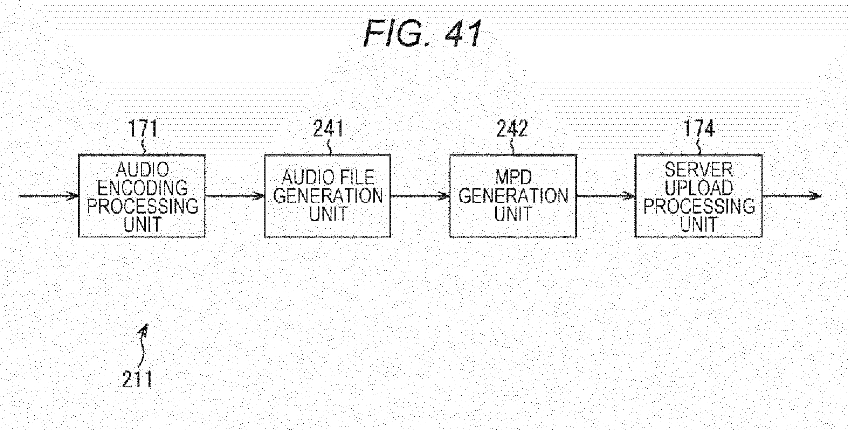

Fig. 41 is a block diagram illustrating a configuration example of the file generation device 211 of Fig. 40.

The same configurations, of configurations illustrated in Fig. 41, with the configurations of Fig. 16, are denoted with the same reference signs. Overlapping description is appropriately omitted.

The configuration of the file generation device 211 of Fig. 41 is different from the file generation device 141 of Fig. 16 in that an audio file generation unit 241 and an MPD generation unit 242 are provided in place of the audio file generation unit 172 and the MPD generation unit 173.

To be specific, the audio file generation unit 241 of the file generation device 211 allocates a track to the audio stream supplied from the audio encoding processing unit 171 for each group and each type of the Extelement. The audio file generation unit 241 generates the audio file in which the audio stream is arranged, at each encoding speed, for each segment, and for each track. The audio file generation unit 241 supplies the generated audio files to the MPD generation unit 242.

The MPD generation unit 242 determines a URL of the web server 142 to which the audio files supplied from the audio file generation unit 172 are to be stored, and the like. The MPD generation unit 242 generates the MPD file in which the URL of the audio file and the like are arranged in the "Segment" of the "Representation" for the audio file. The MPD generation unit 173 supplies the generated MPD file and the generated audio files to the server upload processing unit 174.

### (Description of Processing of File Generation Device)

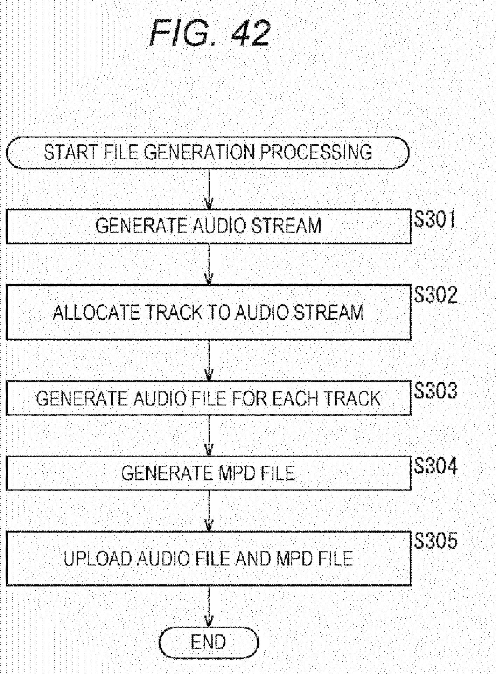

Fig. 42 is a flowchart for describing file generation processing of the file generation device 211 of Fig. 41.

Processing of steps S301 and S302 of Fig. 42 is similar to the processing of steps S191 and S192 of Fig. 17, and thus description is omitted.

In step S303, the audio file generation unit 241 generates the audio file in which the audio stream is arranged at each encoding speed, for each segment, and for each track. The audio file generation unit 241 supplies the generated audio files to the MPD generation unit 242.

Processing of steps S304 and S305 is similar to the processing of steps S194 and S195 of Fig. 17, and thus description is omitted.

### (Functional Configuration Example of Moving Image Reproduction Terminal)

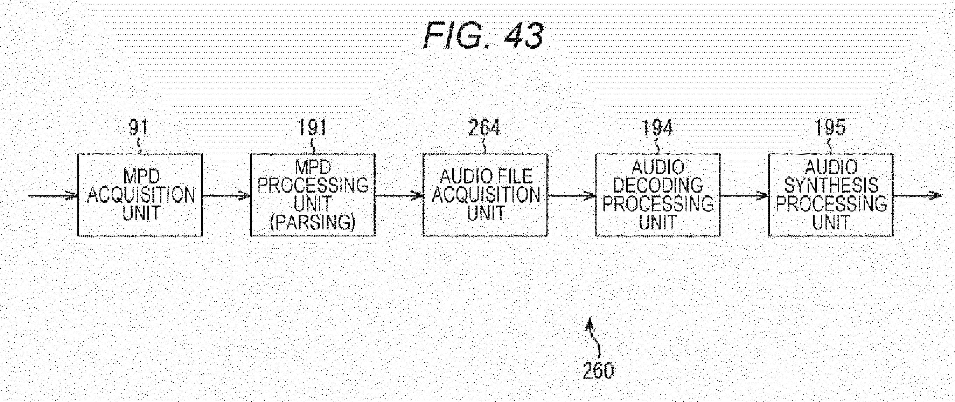

Fig. 43 is a block diagram illustrating a configuration example of a streaming reproduction unit realized such that the moving image reproduction terminal 214 of Fig. 40 executes the control software 221, the moving image reproduction software 162, and the access software 223.

The same configurations, of configurations illustrated in Fig. 43, with the configurations of Fig. 18, are denoted with the same reference signs. Overlapping description is appropriately omitted.

The configuration of a streaming reproduction unit 260 of Fig. 43 is different from the configuration of the streaming reproduction unit 190 of Fig. 18 in that an audio file acquisition unit 264 is provided in place of the audio file acquisition unit 192.

The audio file acquisition unit 264 requests the web server 142 to acquire the audio stream of the audio file on the basis of the URL of the audio file of the track to be reproduced, of the URLs supplied from the MPD processing unit 191. The audio file acquisition unit 264 supplies the acquired audio stream to the audio decoding processing unit 194.

That is, the audio file acquisition unit 264, the audio decoding processing unit 194, and the audio synthesis processing unit 195 function as a reproduction unit, and acquire the audio stream of the audio file of the track to be reproduced, from the audio files stored in the web server 212 and reproduce the audio stream.

### (Description of Processing of Moving Image Reproduction Terminal)

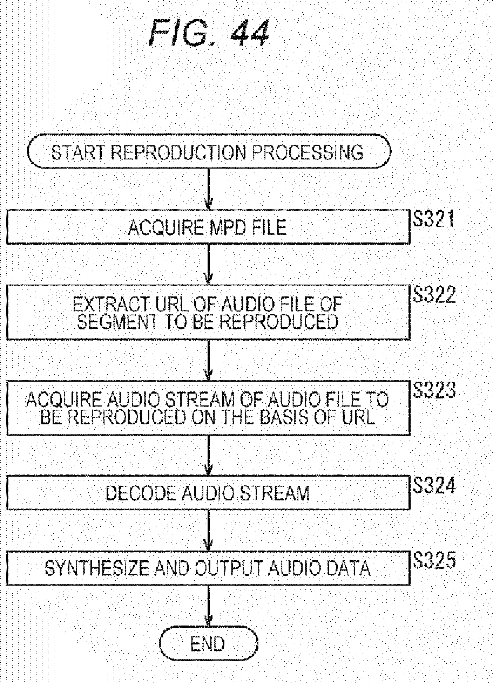

Fig. 44 is a flowchart for describing reproduction processing of the streaming reproduction unit 260 of Fig. 43.

Processing of steps S321 and S322 of Fig. 44 is similar to the processing of steps S211 and S212 of Fig. 19, and thus description is omitted.

In step S323, the audio file acquisition unit 192 requests the web server 142 to acquire the audio stream of the audio file, of the URLs supplied from the MPD processing unit 191, on the basis of the URL of the audio file of the track to be reproduced. The audio file acquisition unit 264 supplies the acquired audio stream to the audio decoding processing unit 194.

Processing of steps S324 and S325 is similar to the processing of steps S214 and S215 of Fig. 19, and thus description is omitted.

Note that, in the second embodiment, the GroupDefinition and the SwitchGroupDefinition may also be arranged in sample group entry, similarly to the first embodiment.

Further, in the second embodiment, the configurations of the track of the audio data can also be the configurations illustrated in Figs. 23, 26, 28, 30, 32 to 34, and 35, similarly to the first embodiment.

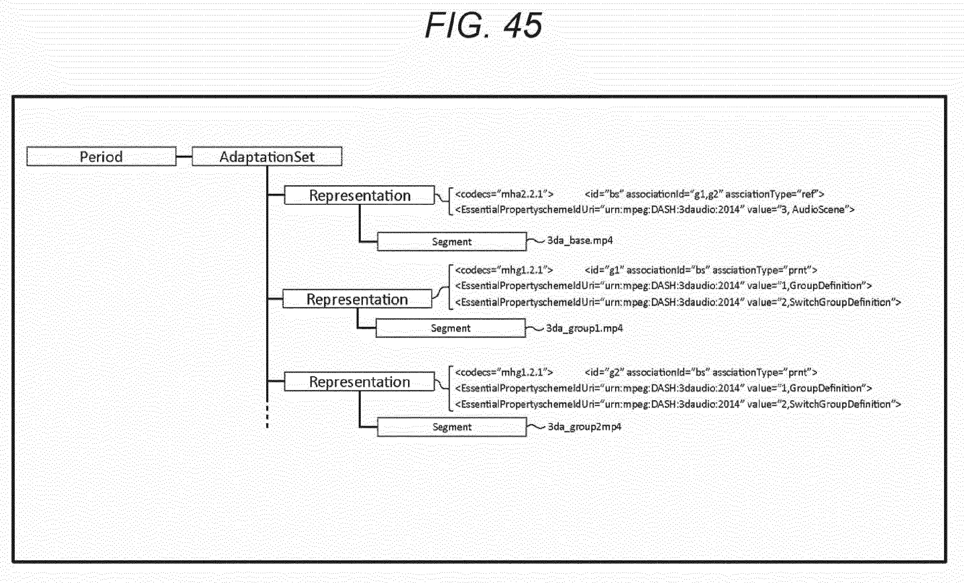

Figs. 45 to 47 are diagrams respectively illustrating MPD in a case where the configurations of the track of the audio data in the second embodiment are the configurations illustrated in Figs. 23, 26, and 28. In the second embodiment, the MPD in a case where the configurations of the track of the audio data are the configuration illustrated in Figs. 32, 33, 34, or 35 is the same as the MPD in the case of the configurations illustrated in Figs. 23, 26, and 28.

The MPD of Fig. 45 is different from the MPD of Fig. 39 in the "codecs" and the "associationId" of the base track, and in that <EssentialProperty schemeIdUri = "urn:mpeg:DASH:3daudio:2014" value = "dataType,definition"> is included in the "Representation" of the base track. To be specific, the "codecs" of the "Representation" of the base track of the MPD of Fig. 45 is "mha2.2.1", and the "associationId" is "g1" and "g2" that are the "ids" of the group tracks.

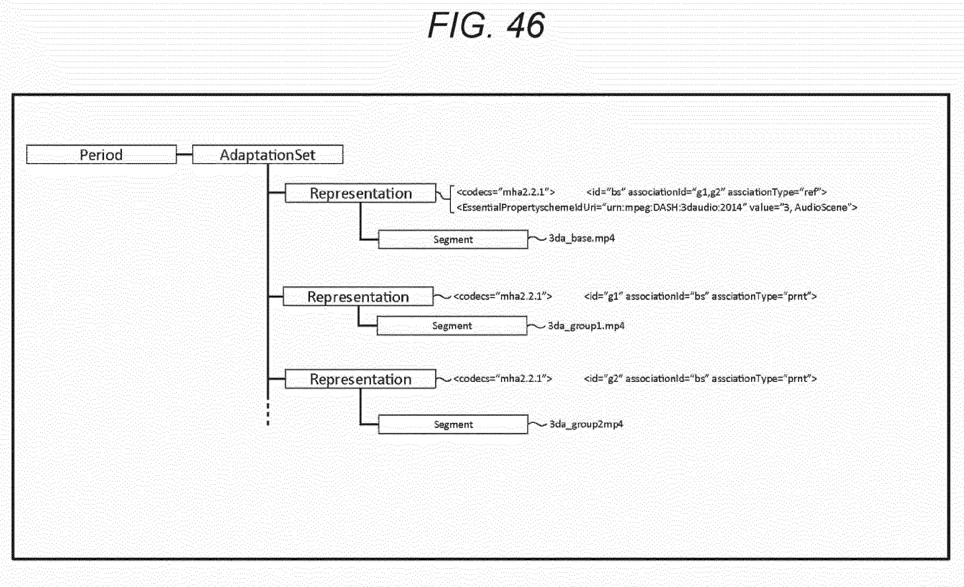

Further, the MPD of Fig. 46 is different from the MPD of Fig. 45 in the "codecs" of the group track, and in that <EssentialProperty schemeIdUri = "urn:mpeg:DASH:3daudio:2014" value = "dataType,definition"> is not included in the "Representation" of the group track. To be specific, the "codecs" of the group track of the MPD of Fig. 46 is "mha2.2.1".

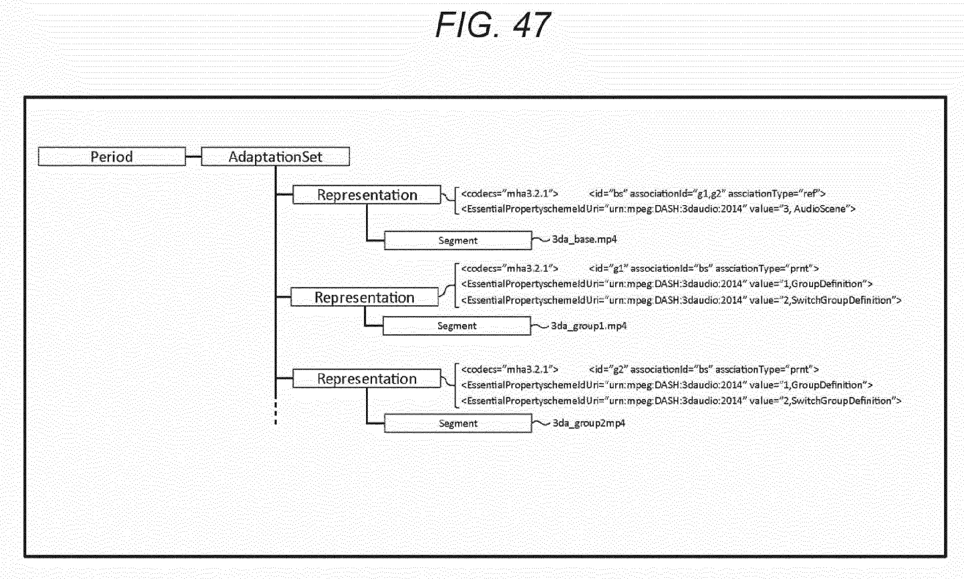

Further, the MPD of Fig. 47 is different from the MPD of Fig. 45 in the "codecs" of the base track and the group track. To be specific, the "codecs" of the group track of the MPD of Fig. 47 is "mha3.2.1".

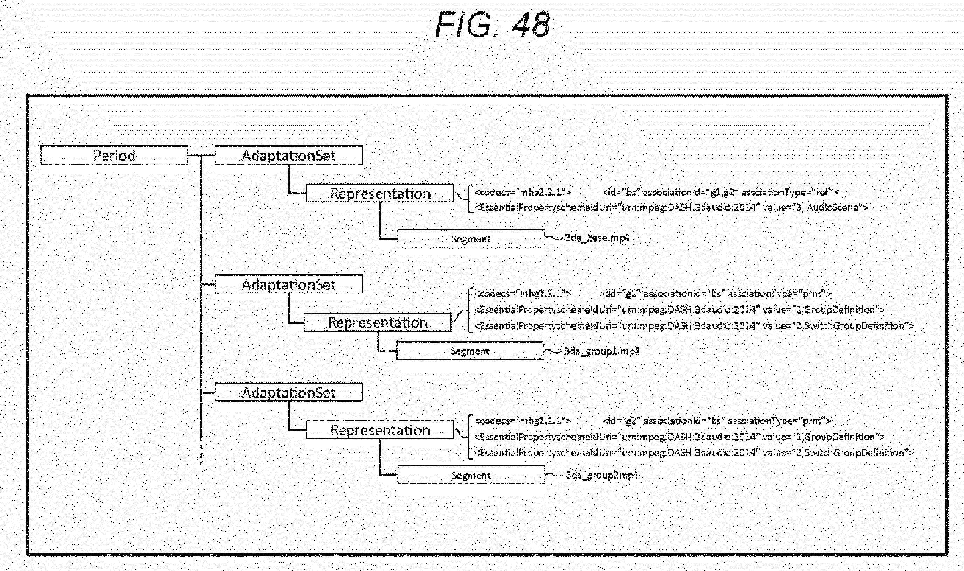

Note that, in the MPD of Figs. 45 to 47, "AdaptationSet" can be divided for each "Representation", as illustrated in Figs. 48 to 50.

### <Another Example of Base Track>

In the above description, only one base track is provided. However, a plurality of the base tracks may be provided. In this case, the base track is provided for each viewpoint of the 3D audio (details will be given below), for example, and in the base tracks, mhaC boxes including config information of all of the groups of the 3D audio of the viewpoints are arranged. Note that, in the base tracks, mhas boxes including the AudioScene information of the viewpoints may be arranged.

The viewpoint of the 3D audio is a position where the 3D audio can be heard, such as a viewpoint of an image reproduced at the same time with the 3D audio or a predetermined position set in advance.

As described above, in a case where the base track is divided for each viewpoint, audio different for each viewpoint can be reproduced from the audio stream of the same 3D audio on the basis of the position of an object on a screen and the like included in the config information of each of the viewpoints. As a result, a data amount of the audio streams of the 3D audio can be reduced.

That is, in a case where the viewpoints of the 3D audio are a plurality of viewpoints of images of a baseball stadium, which can be reproduced at the same time with the 3D audio, an image having a viewpoint in a center back screen is prepared as a main image that is an image of a basic viewpoint. Further, images having viewpoints in a seat behind the plate, a first-base infield bleacher seat, a third-base infield bleacher seat, a left outfield bleacher seat, a right outfield bleacher seat, and the like are prepared as multi-images that are images of the viewpoints other than the basic viewpoint.

In this case, if the 3D audio of all of the viewpoints is prepared, the data amount of the 3D audio becomes large. Therefore, by describing, to the base tracks, the positions of the object on the screen and the like in the viewpoints, the audio streams such as Object audio and SAOC Object audio, which are changed according to the positions of the object on the screen, can be shared by the viewpoints. As a result, the data amount of the audio streams of the 3D audio can be reduced.

At the time of reproduction of the 3D audio, for example, different audio is reproduced according to the viewpoint, using the audio streams such as the Object audio and the SAOC Object audio of the basic viewpoint, and the base track corresponding to the viewpoint of the main image or the multi-image reproduced at the same time with the audio stream.

Similarly, for example, in a case where the viewpoints of the 3D audio are positions of a plurality of seats of a stadium set in advance, the data amount of the 3D audio becomes large if the 3D audio of all of the viewpoints is prepared. Therefore, by describing, to the base tracks, the positions of the object on the screen, in the viewpoints, the audio streams such as the Object audio and the SAOC Object audio can be shared by the viewpoints. As a result, different audio can be reproduced according to the seat selected by the user using a seating chart, using the Object audio and the SAOC Object audio of one viewpoint, and the data amount of the audio streams of the 3D audio can be reduced.

In a case where the base track is provided for each viewpoint of the 3D audio in the track structure of Fig. 28, the track structure becomes one as illustrated in Fig. 51. In the example of Fig. 51, the number of viewpoints of the 3D audio is three. Further, in the example of Fig. 51, Channel audio is generated for each viewpoint of the 3D audio, and other audio data are shared by the viewpoints of the 3D audio. The same applies to the example of Fig. 52 described below.

In this case, three base tracks are provided for each viewpoint of the 3D audio, as illustrated in Fig. 51. Track Reference is arranged in the track box of each of the base tracks. Further, syntax of sample entry of each of the base tracks is the same as the syntax of the sample entry with 4cc of "mha3". The 4cc is "mhcf" that indicates that the base track is provided for each viewpoint of the 3D audio.

The mhaC box including config information of all of groups of the 3D audio of each of the viewpoints is arranged in the sample entry of each of the base tracks. As the config information of all of the groups of the 3D audio of each of the viewpoints is the position of the object on the screen, in the viewpoint, for example. Further, the mhas box including the AudioScene information of each of the viewpoints is arranged in each of the base tracks.

The audio streams of the groups of the Channel audio of the viewpoints are arranged in samples of the base tracks.

Note that, in a case where Object Metadata that describes the position of the object on the screen, in each of the viewpoints, in units of a sample, exists, the Object Metadata is also arranged in the sample of each of the base tracks.

That is, in a case where the object is a moving body (for example, a sport athlete), the position of the object on the screen in each of the viewpoints is temporally changed. Therefore, the position is described as Object Metadata in units of the sample. In this case, the Object Metadata in units of the sample is arranged, for each viewpoint, in the sample of the base track corresponding to the viewpoint.

The configurations of the group tracks of Fig. 51 are the same as the configuration of Fig. 28 except that the audio stream of the group of the Channel audio is not arranged, and thus description is omitted.

Note that, in the track structure of Fig. 51, the audio streams of the groups of the Channel audio of the viewpoints may not be arranged in the base track, and may be arranged in the different group tracks. In this case, the track structure becomes one illustrated in Fig. 52.

In the example of Fig. 52, the audio stream of the group of the Channel audio of the viewpoint corresponding to the base track with the track ID of "1" is arranged in the group track with the track ID of "4". Further, the audio stream of the group of the Channel audio of the viewpoint corresponding to the base track with the track ID of "2" is arranged in the group track with the track ID of "5".

Further, the audio stream of the group of the Channel audio of the viewpoint corresponding to the base track with the track ID of "3" is arranged in the group track with the track ID of "6".

Note that, in the examples of Figs. 51 and 52, the 4cc of the sample entry of the base track is "mhcf". However, the 4cc may be "mha3" that is the same as the case of Fig. 28.

Further, although illustration is omitted, a case in which the base track is provided for each viewpoint of the 3D audio in all of the above-described track structures other than the track structure of Fig. 28 is similar to the case of Figs. 51 and 52.

### <Third Embodiment>

### (Description of Computer to Which Present Disclosure Is Applied)

The series of processing of the web server 142 (212) canbe executed by hardware or can be executed by software. In a case of executing the series of processing by software, a program that configures the software is installed to the computer. Here, the computer includes a computer incorporated in special hardware, and a general-purpose personal computer that can execute various types of functions by installing various types of programs, and the like.

Fig. 53 is a block diagram illustrating a configuration example of hardware of the computer that executes the series of processing of the web server 142 (212) with a program.

In the computer, a central processing unit (CPU) 601, a read only memory (ROM) 602, and a random access memory (RAM) 603 are mutually connected by a bus 604.

An input/output interface 605 is further connected to the bus 604. An input unit 606, an output unit 607, a storage unit 608, a communication unit 609, and a drive 610 are connected to the input/output interface 605.

The input unit 606 is made of a keyboard, a mouse, a microphone, and the like. The output unit 607 is made of a display, a speaker, and the like. The storage unit 608 is made of a hard disk, a non-volatile memory, and the like. The communication unit 609 is made of a network interface, and the like. The drive 610 drives a removable medium 611 such as a magnetic disk, an optical disk, or a magneto-optical disk, or a semiconductor memory.

In the computer configured as described above, the CPU 601 loads the program stored in the storage unit 608 onto the RAM 603 through the input/output interface 605 and the bus 604, and executes the program, so that the series of processing is performed.

The program executed by the computer (CPU 601) can be provided by being recorded in the removable medium 611 as a package medium, for example. Further, the program can be provided through a wired or wireless transmission medium, such as a local area network, the Internet, or digital satellite broadcasting.

In the computer, the program can be installed to the storage unit 608 through the input/output interface 605 by attaching the removable medium 611 to the drive 610. Further, the program can be received by the communication unit 609 through a wired or wireless transmission medium, and installed to the storage unit 608. In addition, the program can be installed to the ROM 602 or the storage unit 608 in advance.

Note that the program executed by the computer may be a program processed in time series according to the order described in the present specification, or may be a program processed in parallel or at necessary timing such as when called.

Further, the hardware configuration of the moving image reproduction terminal 144 (214) can have a similar configuration to the computer of Fig. 53. In this case, for example, the CPU 601 executes the control software 161 (221), the moving image reproduction software 162, and the access software 163 (223). The processing of the moving image reproduction terminal 144 (214) can be executed by hardware.

In the present specification, a system means a collective of a plurality of configuration elements (devices, modules (components), and the like), and all of the configuration elements may or may not be in the same casing. Therefore, both of a plurality of devices accommodated in separate casings and connected via a network, and a single device in which a plurality of modules are accommodated in a single casing are the systems.

Note that embodiments of the present disclosure are not limited to the above-described embodiments, and various changes can be made without departing from the spirit and scope of the present disclosure.

Further, the present disclosure can be applied to an information processing system that performs broadcasting or local storage reproduction, instead of streaming reproduction.

In the embodiments of the MPD, the information is described by EssentialProperty having descriptor definition that can be ignored when the content described by the schema cannot be understood. However, the information may be described by SupplementalProperty having descriptor definition that can be reproduced even if the content described by the schema cannot be understood. This description method is selected by the side that creates the content with intention.

Further, the present disclosure can employ the configurations like below.

(1) An information processing apparatus including:
   a file generation unit configured to generate a file in which audio data of a plurality of kinds is divided into tracks for each one or more of the kinds and arranged, and information related to the plurality of kinds is arranged.
(2) The information processing apparatus according to (1), wherein
   the information related to the plurality of kinds is arranged in sample entry of a predetermined track.
(3) The information processing apparatus according to (2), wherein
   the predetermined track is one of the tracks in which the audio data of a plurality of kinds is divided and arranged.
(4) The information processing apparatus according to any one of (1) to (3), wherein,
   for each of the tracks, information related to the kind corresponding to the track is arranged in the file.
(5) The information processing apparatus according to (4), wherein,
   for each of the tracks, information related to an exclusive reproduction kind made of the kind corresponding to the track, and the kind corresponding to the audio data exclusively reproduced from the audio data of the kind corresponding to the track is arranged in the file.
(6) The information processing apparatus according to (5), wherein
   information related to the kind corresponding to the track and the information related to an exclusive reproduction kind are arranged in sample entry of the corresponding track.
(7) The information processing apparatus according to (5) or (6), wherein
   the file generation unit generates a management file that manages the file including information indicating whether the information related to an exclusive reproduction kind exists for each of the tracks.
(8) The information processing apparatus according to any one of (1) to (7), wherein
   reference information to the tracks corresponding to the plurality of kinds is arranged in the file.
(9) The information processing apparatus according to (8), wherein
   the reference information is arranged in a sample of the predetermined track.
(10) The information processing apparatus according to (9), wherein
   the predetermined track is one of the tracks in which the audio data of a plurality of kinds is divided and arranged.
(11) The information processing apparatus according to any one of (1) to (10), wherein
   information indicating reference relationship among the tracks is arranged in the file.
(12) The information processing apparatus according to any one of (1) to (11), wherein
   the file generation unit generates a management file that manages the file including information indicating reference relationship among the tracks.
(13) The information processing apparatus according to any one of (1) to (12), wherein
   the file is one file.
(14) The information processing apparatus according to any one of (1) to (12), wherein
   the file is a file of each of the tracks.
(15) An information processing method including the step of:
   by an information processing apparatus, generating a file in which audio data of a plurality of kinds is divided into tracks for each one or more of the kinds and arranged, and information related to the plurality of kinds is arranged.
(16) An information processing apparatus including:
   a reproduction unit configured to reproduce, from a file in which audio data of a plurality of kinds is divided into tracks for each one or more of the kinds and arranged, and information related to the plurality of kinds is arranged, the audio data of a predetermined track.
(17) An information processing method including the step of:
   by an information processing apparatus, reproducing, from file in which audio data of a plurality of kinds is divided into tracks for each one or more of the kinds and arranged, and information related to the plurality of kinds is arranged, the audio data of a predetermined track.

### REFERENCE SIGNS LIST

- 11: File generation device
- 192: Audio file acquisition unit
- 194: Audio decoding processing unit
- 195: Audio synthesis processing unit
- 211: File generation device
- 264: Audio file acquisition unit

## Claims

1. An information processing apparatus comprising:
a file generation unit configured to generate a file in which audio data of a plurality of kinds is divided into tracks for each one or more of the kinds and arranged, and information related to the plurality of kinds is arranged.

2. The information processing apparatus according to claim 1, wherein
the information related to the plurality of kinds is arranged in sample entry of a predetermined track.

3. The information processing apparatus according to claim 2, wherein
the predetermined track is one of the tracks in which the audio data of a plurality of kinds is divided and arranged.

4. The information processing apparatus according to claim 1, wherein,
for each of the tracks, information related to the kind corresponding to the track is arranged in the file.

5. The information processing apparatus according to claim 4, wherein,
for each of the tracks, information related to an exclusive reproduction kind made of the kind corresponding to the track, and the kind corresponding to the audio data exclusively reproduced from the audio data of the kind corresponding to the track is arranged in the file.

6. The information processing apparatus according to claim 5, wherein
information related to the kind corresponding to the track and the information related to an exclusive reproduction kind are arranged in sample entry of the corresponding track.

7. The information processing apparatus according to claim 5, wherein
the file generation unit generates a management file that manages the file including information indicating whether the information related to an exclusive reproduction kind exists for each of the tracks.

8. The information processing apparatus according to claim 1, wherein
reference information to the tracks corresponding to the plurality of kinds is arranged in the file.

9. The information processing apparatus according to claim 8, wherein
the reference information is arranged in a sample of a predetermined track.

10. The information processing apparatus according to claim 9, wherein
the predetermined track is one of the tracks in which the audio data of a plurality of kinds is divided and arranged.

11. The information processing apparatus according to claim 1, wherein
information indicating reference relationship among the tracks is arranged in the file.

12. The information processing apparatus according to claim 1, wherein
the file generation unit generates a management file that manages the file including information indicating reference relationship among the tracks.

13. The information processing apparatus according to claim 1, wherein
the file is one file.

14. The information processing apparatus according to claim 1, wherein
the file is a file of each of the tracks.

15. An information processing method comprising the step of:
by an information processing apparatus, generating a file in which audio data of a plurality of kinds is divided into tracks for each one or more of the kinds and arranged, and information related to the plurality of kinds is arranged.

16. An information processing apparatus comprising:
a reproduction unit configured to reproduce, from a file in which audio data of a plurality of kinds is divided into tracks for each one or more of the kinds and arranged, and information related to the plurality of kinds is arranged, the audio data of a predetermined track.

17. An information processing method comprising the step of:
by an information processing apparatus, reproducing, from file in which audio data of a plurality of kinds is divided into tracks for each one or more of the kinds and arranged, and information related to the plurality of kinds is arranged, the audio data of a predetermined track.

## Amended claims

### Amended claims under Art. 19.1 PCT

**1.** An information processing apparatus comprising:
a file generation unit configured to allocate a track to an audio stream made of one track including a plurality of groups, the group being indicated with a group ID and being configured from one or more audio elements, for each of the groups, to generate a file made of a plurality of the tracks.

**2.** The information processing apparatus according to claim 1, wherein
the file includes information indicating correspondence between the plurality of groups and the plurality of tracks.

**3.** The information processing apparatus according to claim 2, wherein
the information indicating correspondence between the plurality of groups and the plurality of tracks includes the group IDs of the plurality of groups.

**4.** The information processing apparatus according to claim 2, wherein
the information indicating correspondence between the plurality of groups and the plurality of tracks includes the group IDs of the plurality of groups and track IDs corresponding to the plurality of tracks.

**5.** The information processing apparatus according to claim 2, wherein
the information indicating correspondence between the plurality of groups and the plurality of tracks is included in a base track.

**6.** The information processing apparatus according to claim 2, wherein
the file generation unit sets the information indicating correspondence between the plurality of groups and the plurality of tracks to a box different from audio scene information related to the plurality of groups and config information of the plurality of groups.

**7.** The information processing apparatus according to claim 1, wherein
information related to the plurality of groups is arranged in sample entry of a predetermined track in the file.

**8.** The information processing apparatus according to claim 1, wherein,
for each of the tracks, information related to the group corresponding to the track is arranged in the file.

**9.** The information processing apparatus according to claim 1, wherein,
for each of the tracks, information related to an exclusive reproduction group made of the group corresponding to the track, and the group corresponding to the audio element exclusively reproduced from the audio element of the group corresponding to the track is arranged in the file.

**10.** The information processing apparatus according to claim 9, wherein
information related to the group corresponding to the track and the information related to an exclusive reproduction group are arranged in sample entry of the corresponding track.

**11.** The information processing apparatus according to claim 9, wherein
the file generation unit generates a management file that manages the file including information indicating whether the information related to an exclusive reproduction group exists for each of the tracks.

**12.** The information processing apparatus according to claim 1, wherein
reference information to the plurality of tracks is arranged in the file.

**13.** The information processing apparatus according to claim 12, wherein
the reference information is arranged in a sample of a predetermined track.

**14.** The information processing apparatus according to claim 1, wherein
information indicating reference relationship among the tracks is arranged in the file.

**15.** The information processing apparatus according to claim 1, wherein
the file generation unit generates a management file that manages the file including information indicating reference relationship among the tracks.

**16.** The information processing apparatus according to claim 1, wherein
the file is one file.

**17.** The information processing apparatus according to claim 1, wherein
the file is a file of each of the tracks.

**18.** An information processing method comprising the step of:
allocating a track to an audio stream made of one track including a plurality of groups, the group being indicated with a group ID and being configured from one or more audio elements, for each of the groups, to generate a file made of a plurality of the tracks.

**19.** An information processing apparatus comprising:
a reproduction unit configured to reproduce a predetermined track from a file made of a plurality of tracks, the file being generated by allocating, for each of groups, a track to an audio streammade of one track including a plurality of the groups, the group being indicated with a group ID and being configured from one or more audio elements.

**20.** An information processing method comprising the step of:
reproducing a predetermined track from a file made of a plurality of tracks, the file being generated by allocating, for each of groups, a track to an audio stream made of one track including plurality of the groups, the group being indicated with a group ID and being configured from one or more audio elements.
